(19) **Europäisches Patentamt European Patent Office Office européen des brevets**

(11) **EP 4 567 630 A1**

(12) # EUROPEAN PATENT APPLICATION

(43) Date of publication:
**11.06.2025 Bulletin 2025/24**

(21) Application number: **24217725.1**

(22) Date of filing: **05.12.2024**

(51) International Patent Classification (IPC):
***G06F 16/3329*** (2025.01)   ***G06F 40/35*** (2020.01)

(52) Cooperative Patent Classification (CPC):
**G06F 16/3329; G06F 40/35**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.12.2023 KR 20230174949**

(71) Applicant: **LG Management Development Institute Co., Ltd.**
**Seoul 07336 (KR)**

(72) Inventors:
• **SOHN, Sungryull**
**Ann Arbor, Michigan 48105 (US)**

• **LOGESWARAN, Lajanugen**
**Ann Arbor, Michigan 48105 (US)**
• **KIM, Dongki**
**Ann Arbor, Michigan 48105 (US)**
• **SHIM, Dongsub**
**Ann Arbor, Michigan 48105 (US)**
• **LEE, Honglak**
**Ann Arbor, Michigan 48105 (US)**
• **LIU, Anthony**
**Ann Arbor, Michigan 48105 (US)**
• **LYU, Yiwei**
**Ann Arbor, Michigan 48105 (US)**

(74) Representative: **BCKIP Part mbB MK1**
**Landsbergerstraße 98, 3.Stock**
**80339 München (DE)**

(54) **METHOD AND SYSTEM FOR AUTOMATICALLY PERFORMING TASKS DETERMINED BASED ON USER DIALOGUE INPUT**

(57)     A method for automatically performing a task may perform a task based on a user dialogue input by a computing system including a memory and a processor. The method may include: receiving a user dialogue input; determining a type of a task requested by a user by analyzing the user dialogue input; obtaining task context data required to perform the task based on the user dialogue input; and performing the task of which type is determined based on the task context data.

**EP 4 567 630 A1**

**Description**

This application claims priority to Korean Patent Application No. 10-2023-0174949, filed on December 5, 2023.

**BACKGROUND**

**Technical Field**

The present disclosure relates to a method and system for automatically performing tasks determined based on a user dialogue input, and more specifically, to a method and system for systematically and automatically performing tasks requested by a user determined based on a user dialogue input, based on task context data acquired based on the user dialogue input.

**Related Art**

In recent years, as artificial intelligence (AI) technology has been developed, various services using artificial intelligence have been commercialized in various industries. This artificial intelligence technology can be provided by outputting information desired by a user by learning a vast amount of data by an artificial neural network model.

An AI model may learn the pattern of the data to provide an output value for an input value, as well as provide an interactive artificial intelligence model that can performs a dialogue with the user. An AI assistant using the interactive AI model can be applied to smart devices to provide a personal assistant function, a chatbot that responds to questions of corporate customers, a home appliance connected to the Internet of Things at the request of the user, and a smart home system that can control an operation of the home appliance. As a result, the interactive AI model can provide users with more convenient and user -friendly experiences in various technical areas.

In addition, research on the AI technology that can perform the work or function requested by the user is being actively conducted, and for this purpose, application of an analysis method based on a task-oriented dialogue graph to the interactive AI model is being attempted several times.

However, since the previous research related to the task-oriented dialogue graphs is only a method which attempts to create a dialogue graph directly drawn by a person or uses a rule based system which automatically infers the dialogue graph based on an already learned dialogue policy, a dialogue model based on an automatically constructed dialogue graph may not be provided only based on a dialogue dataset without intervention of a person, or various dialogue flows cannot be modeled.

Meanwhile, in general, the AI is implemented through multiple AI models and deep learning based thereon.

This AI is being developed to provide a variety of services in consideration of the user's context (e.g., context, environment and/or intents, etc.).

However, if specific tasks are intended to be processed based on large amounts of data, operational cost or time required for processing those tasks are considerable.

As a result, in recent years, there has also been a limitation of the use of the AI model in an on-device environment.

In order to solve this, model architecture such as mixture of experts (MoE) is utilized in the related art.

Here, the MoE may have architecture of a machine learning model which solves complex problems by combining multiple expert models.

The MoE can include expert models, which are several small network designed to learn different parts and/or different features of predetermined data, and perform resulting data processing operation, and a gating network which evaluates the performance of each expert model, and determines which expert model is most suitable for a specific task according to predetermined data.

Therefore, according to the MoE architecture, the gating network which acquires predetermined input data determines probabilistic or decisive task allocation for each expert model, and selected expert models perform individual tasks, and return results thereof to perform data processing for a specific task.

As such an MOE is utilized, the AI model concentrates a calculation resource by activating only a specific part when a complicated task or a large quantity of datasets in order to improve overall efficiency and performance.

However, in the case of the MoE in the related art, a high-level video random access memory (VRAM) is required, and an object to be solved in a fine tuning process is also considerable.

In addition, the MoE method in the related art is to efficiently manage a large size model, and may be limited in supporting the efficiency of the rest of the resources that are not activated according to the given task.

In addition, in the technical field in the related art, a service may be provided by using the AI model implemented mostly, and it may be difficult to quickly and easily secure the AI analysis performance that is most suitable for a given context.

**EP 4 567 630 A1**

## SUMMARY

Some embodiments of the present disclosure may provide a method for performing tasks and a system thereof which determines the type of tasks by analyzing the user dialogue input, and systematically and automatically performs tasks based on task context data required to perform the tasks, the task context data being obtained based on the user dialogue input.

However, technical objects to be achieved by various embodiments of the present disclosure are not limited to the technical objects described above and the present disclosure may have other technical objects.

An embodiment provides a method for automatically performing tasks determined based on a user dialogue input provided by a computing system including a memory and a processor using, which includes: receiving a user dialogue input; determining a type of a task requested by a user by analyzing the user dialogue input; obtaining task context data required to perform the task based on the user dialogue input; and performing the task of which type is determined based on the task context data.

In another aspect, the performing the task may comprise determining the task performing system required to perform the task based on the type information of the task, and performing the task by executing the task performing system based on the task context data.

In another aspect, the method may further comprise receiving data of task-related information related to the task, wherein the performing the task comprises performing the task based on at least one of the task context data and the data of task-related information.

In another aspect, the data of task-related information may comprise text data, and the performing the task comprises: obtaining task-related information capture data by capturing the task-related information in the form of text data; generating a programming code for performing the task by analyzing the task-related information capture data; and performing the task by executing the programming code.

In another aspect, the performing the task by executing the task performing system may comprise entering a predetermined external system and completing the task through some kind of calculation on the predetermined external system.

In another aspect, the method may further comprise determining a response dialogue act responding to the user dialogue input based on a dialogue graph and providing the response dialogue act; and determining a context of task-oriented dialogues by analyzing the task-oriented dialogues including the user dialogue input and the response dialogue act; wherein the determining a type of a task comprises determining the type of a task based on the context of task-oriented dialogues.

In another aspect, the at least one conditional relationship may include one or more of a first conditional relationship (a should relationship) indicating what utterance should occur for one utterance in a dialogue flow, a second conditional relationship (a can relationship) indicating what utterance can occur for one utterance in the dialogue flow, and a third conditional relationship (a should-not relationship) indicating what utterance should not occur for one utterance in the dialogue flow.

In another aspect, the selecting of the one dialogue act group may comprise selecting the one dialogue act group which best satisfies the predetermined condition among the plurality of dialogue act groups.

An embodiment provides a system for automatically performing tasks determined based on a user dialogue input, which includes: at least one memory configured to store instructions that are executable; and at least one processor configured to execute one or more of the instructions to perform operations comprising: receiving a user dialogue input, determining a type of a task requested by a user by analyzing the user dialogue input, obtaining task context data required to perform the task based on the user dialogue input, and performing the task of which type is determined based on the task context data..

An embodiment provides a system for automatically performing tasks determined based on a user dialogue input, which includes: an electronic device configured to receive a user dialogue input; and a computing device including at least one processor configured to: receive a user dialogue input, determine a type of a task requested by a user by analyzing of the user dialogue input, obtain task context data required to perform the task based on the user dialogue input, and perform the task of which type is determined based on the task context data.

According to various embodiments of the present disclosure, there can be provided a method for systematically and automatically performing tasks by determining a type of a task requested by a user by analyzing of a user dialogue input and performing the task of which type is determined using data of basic information required to perform the task obtained from user dialogue input and/or data of information associated with keywords included in the user dialogue input obtained from a external database.

However, the effects that can be obtained through various embodiments of the present disclosure are not limited to the effect mentioned above, and other effects not mentioned can be clearly understood from the following descriptions.

3

**BRIEF DESCRIPTION OF THE DRAWING**

FIG. 1 illustrates a block diagram of a computing system or a computer system which implements a task-oriented dialogue service and a task performing service according to an embodiment of the present disclosure.

FIG. 2 is a conceptual diagram for describing a method for performing a task requested by a user based on a task-oriented dialogue service by a computing system according to an embodiment of the present disclosure.

FIG. 3 is schematically illustrating a structure of a neuromorphic circuit which may be included in a processor according to an embodiment of the present disclosure.

FIG. 4 is a block diagram of a computing device or a computer which implements the task-oriented dialogue service and the task performing service according to an embodiment of the present disclosure.

FIG. 5 is a block diagram of a computing device or a computer which implements a task-oriented dialogue service and a task performing service according to another embodiment of the present disclosure.

FIG. 6 is a block diagram of a computing device or a computer which implements a task-oriented dialogue service according to yet another embodiment of the present disclosure.

FIG. 7 is a conceptual diagram for describing a process in which a task-oriented dialogue service is provided according to an embodiment of the present disclosure.

FIG. 8 illustrates a block diagram of an artificial intelligence (AI) agent model according to an embodiment of the present disclosure.

FIG. 9 is a flowchart of a task-oriented dialogue method according to an embodiment of the present disclosure.

FIG. 10 is a conceptual diagram for describing a task-oriented dialogue method according to an embodiment of the present disclosure.

FIG. 11 is a table for describing a performance evaluation result of a task-oriented dialogue method according to an embodiment of the present disclosure.

FIG. 12 is a flowchart of a task performing method based on a context of a task-oriented dialogue through a dialogue model according to an embodiment of the present disclosure.

FIG. 13 is a flowchart of a method for automatically performing tasks determined based on a user dialogue input according to an embodiment of the present disclosure.

FIG. 14 is flowchart for describing the performing the task of the method of FIG. 13 according to an embodiment of the present disclosure

FIG. 15 is a flowchart for describing a mixture of experts (MoE) based model specifying method according to an embodiment of the present disclosure.

FIG. 16 is a conceptual diagram for describing an MoE based model specifying method according to an embodiment of the present disclosure.

FIG. 17 illustrates an example of specialization model feature information.

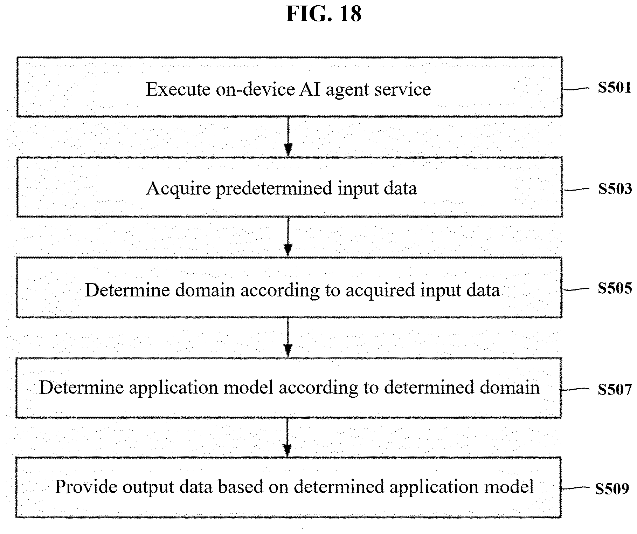

FIG. 18 is a flowchart for describing an MoE application large language model (LLM) based AI agent providing method according to an embodiment of the present disclosure.

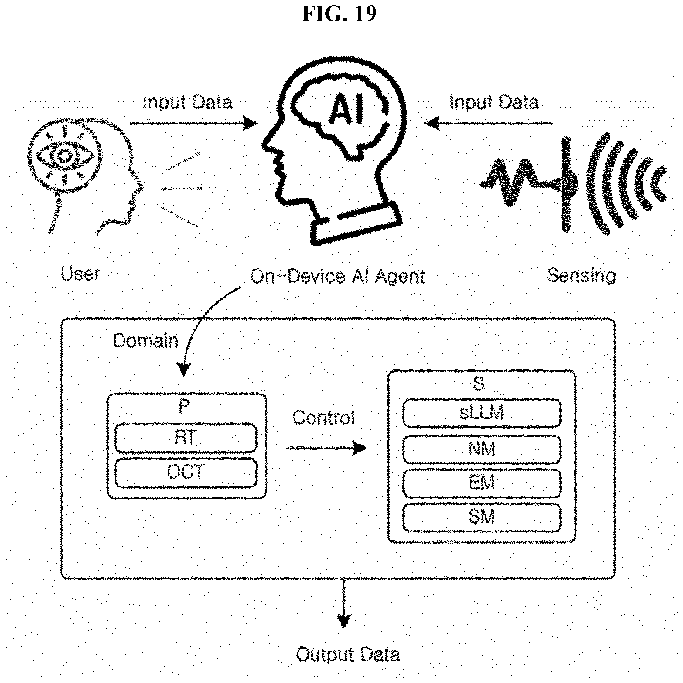

FIG. 19 is a conceptual diagram for describing an MoE application LLM based AI agent providing method according to an embodiment of the present disclosure.

**DETAILED DESCRIPTION**

The present disclosure may have various modifications and various embodiments and specific embodiments will be illustrated in the drawings and described in detail in the detailed description. Effects and features of the present disclosure, and methods for accomplishing the same will be more clearly understood from embodiments described in detail below with reference to the accompanying drawings. However, the present disclosure is not limited to embodiments disclosed below but may be implemented in various forms. In the following embodiment, the terms such as first, second, etc., are not restrictive meanings but are used for distinguishing one component from other components. Further, a singular form may include a plural form if there is no clearly opposite meaning in the context. Further, the terms such as "include" or "have" mean that there is a feature or a component disclosed in the present disclosure and a possibility that one or more other features or components will be added is not pre-excluded. In addition, in the drawing, for convenience of description, sizes of the components may be exaggerated or reduced. For example, each configuration illustrated in the drawings is arbitrarily shown for understanding and ease of description, but the present disclosure is not limited thereto.

Hereinafter, the embodiments of the present disclosure will be described in detail with reference to the accompanying drawings, in which like reference numerals refer to like or corresponding components and a duplicated description thereof will be omitted when the embodiments are described with reference to the drawings.

## SYSTEM 1000 PROVIDING TASK-ORIENTED DIALOGUE SERVICE

A system 1000 according to an embodiment may generate a task-oriented dialogue graph based on analysis for a dialogue dataset, and select a final response dialogue act through a process of validating and adjusting various response dialogue acts in which a pre-trained dialogue model samples for a user dialogue input based on the generated dialogue graph, and provides the selected final response dialogue act as a response to the user dialogue input.

According to an embodiment of the present disclosure, the system 1000 may generate a dialogue graph by modeling a predetermined conditional relationship for the dialogue dataset, and validate and adjust a response dialogue act sampled based on the predetermined conditional relationship included in the dialogue graph, and provide a more reliable response dialogue act to a user.

Further, the system 1000 according to an embodiment of the present disclosure may determine the type of a task requested by the user based on the user dialogue input and the finally generated response dialogue act, and efficiently perform the task based on the determined type of a task, and provide a more convenient task processing experience to the user.

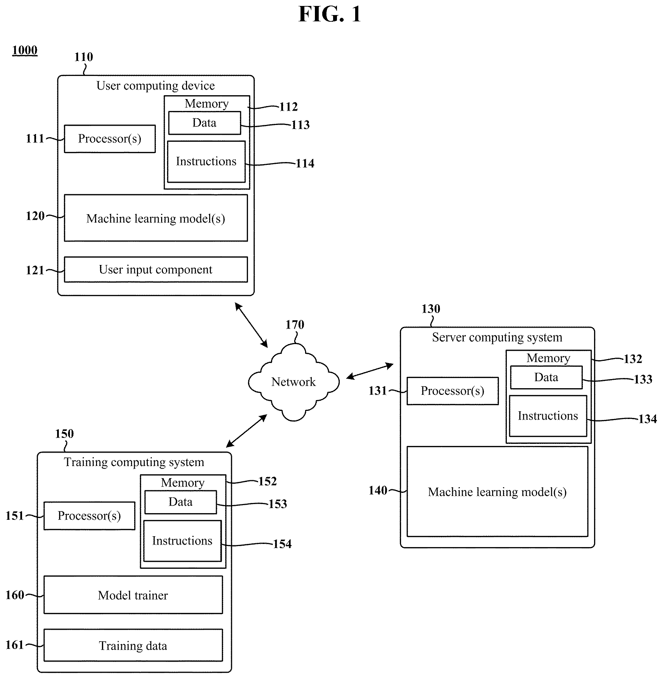

FIG. 1 illustrates a block diagram of a computing system (or a computer system) 1000 which implements a task-oriented dialogue service and a task performing service according to an embodiment of the present disclosure.

Referring to FIG. 1, the computing system 1000 which implements a task-oriented dialogue service and a task performing service according to an embodiment includes a user computing device (or a user computer) 110, a server computing system (or a server computer) 130, and a training computing system (or a training computer) 150, and any other devices which are configured to communicate through a network 170.

A task-oriented dialogue method according to various embodiments may 1) be implemented locally by the user computing device 110, 2) implemented and provided in the form of a web service by the server computing system 130 which communicates with the user computing device 110, and/or 3) implemented and provided by mutual association of the user computing device 110 and the server computing system 130.

In the embodiment of the present disclosure, the user computing device 110 and/or the server computing system 130 may train a machine learning model 120 and/or 140, respectively, through the training computing system 150 communicationally connected through the network 170. The training computing system 150 may be a system separated from the server computing system 130 or may be included in the server computing system 130.

In addition, the artificial intelligence model may be 1) directly trained locally by the user computing device 110, 2) trained while the server computing system 130 and the user computing device 110 interact with each other through the network 170, and/or 3) trained by using various training techniques and learning techniques by the training computing system 150. In addition, the task-oriented dialogue method may also be implemented by a method in which the artificial intelligence model trained by the training computing system 150 is transmitted to the user computing device 110 and/or the server computing system 130 through the network 170, and is provided and updated.

In some embodiments, the training computing system 150 may be a part of the server computing system 130 or a part of the user computing device 110.

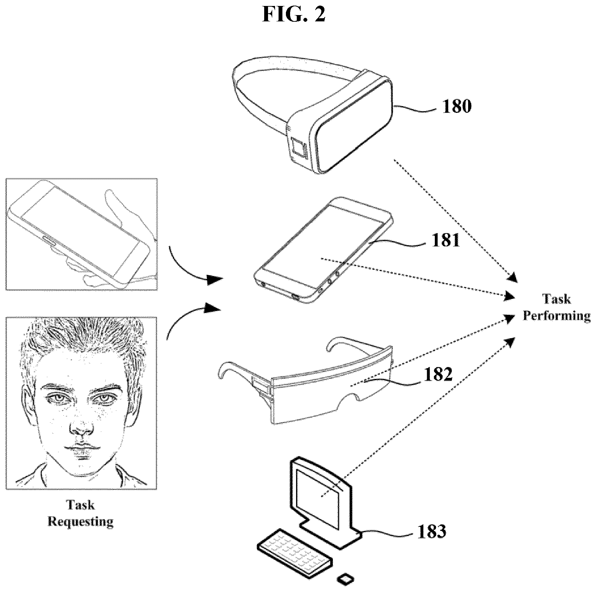

FIG. 2 is a conceptual diagram for describing a method for performing a task requested by a user based on a task-oriented dialogue service by the computing system 1000 according to an embodiment of the present disclosure.

Referring to FIG. 2, the computing system 1000 may receive various types of user dialogue inputs, provide appropriate response dialogue acts in response to the received user dialogue inputs, and perform a task requested by the user based on the user dialogue inputs and the response dialogue acts. Here, the task may include various types of tasks determined based on a task-oriented dialogue including the user dialogue input and the response dialogue act.

The computing system 1000 may determine a context of a series of task-oriented dialogues constituted by the user dialogue inputs and the response dialogue acts thereto.

The computing system 1000 may analyze a pattern of the task-oriented dialogues constituted by various types of user dialogue inputs and response dialogue acts thereto, and determine a context related to an intent, a purpose, etc., of the corresponding dialogue based on the pattern of the task-oriented dialogues.

The computing system 1000 may extract a plurality of keywords included in data of the task-oriented dialogues, and analyze a correlation between a plurality of dialogue acts included in the dialogue, an intent of the corresponding dialogues, a purpose of the corresponding dialogue, etc., based on the plurality of extracted keywords to determine the context of the task-oriented dialogue.

Further, the computing system 1000 may determine the type of the task requested by the user based on information on the context of the task-oriented dialogue.

For example, a plurality of keywords (e.g., a hotel, booking, date, number of persons, 5 star grade, etc.) may be extracted from data of a series of dialogues included in a user dialogue input of requesting hotel booking and a response dialogue act of requesting information (e.g., a booking date, a lodging number, a hotel grade, etc.) related to the hotel booking.

Further, the context of the task-oriented dialogue may be determined by analyzing one or more of a correlation between the user dialogue act included in the corresponding dialogue and the response dialogue act provided by the computing system 1000, an intent of the corresponding dialogue, or a purpose of the corresponding dialogue based on the plurality of extracted keywords.

For example, according to a keyword based context determination process, a context of a dialogue including a plurality of dialogue acts such as 'please, book the hotel', 'When is the date of accommodation?', 'Check-in on December 31, 2024 and Check-out on January 3, 2025', 'How many people are accommodated?', 'Three people', etc., may be determined as the user's request for the hotel booking and accordingly, an automatic hotel booking service may be required to be performed.

Furthermore, the type of the task requested by the user may be determined based on the determined context of the dialogue.

For example, the task requested by the user may be determined as 'booking the hotel' based on the context of the dialogue determined that an automatic hotel booking service needs to be performed according to the hotel booking request of the user.

Meanwhile, the number of types of task determined based on the context of the task-oriented dialogue may be plural. The task-oriented dialogue may include various types of user dialogue inputs and response dialogue acts responding to the user dialogue inputs, and the context of the task-oriented dialogue may be related to various tasks. As a result, a plurality of task types may be determined based on the context of the task-oriented dialogue according to an embodiment.

The system 1000 may perform the task of which type is determined based on the task-oriented dialogue included in the user dialogue input and the response dialogue act, and a performance result to the user.

For example, when the type of task is determined as 'booking the hotel', the system 1000 may perform a hotel booking task, which is requested by the user, based on data related to a series of task-oriented dialogues.

In this case, the computing system 1000 supports certain calculations necessary to determine the type of the task and to perform the task.

For example, the operating system (OS) of the system 1000 may control the processor 111, 131 to determine the type of a task and perform certain calculations necessary to perform the task of which the type has been determined.

In addition, for example, the operating system OS of the system 1000 may provide a predetermined API (Application programming interface) and/or SDK (Software development kit) to support predetermined calculations required to determine the type of a task and perform the task of which the type has been determined.

The system 1000 may generate a programming code required to perform the task of which type is determined based on the context of the task-oriented dialogue, and execute the generated programming code to perform the task. Here, the programming code may be a code created to perform a specific task by using a programming language (e.g., JAVA, Python, JavaScript, etc.)

Meanwhile, as the system 1000 receives the user dialogue input, the system 1000 may capture a screen of a device used by the user to acquire a user screen shot.

Thereafter, the system 1000 may determine the type of task based on information on the determined context of the task-oriented dialogue and analysis of the user screen shot.

For example, when the context of the dialogue is determined as 'booking the hotel' and the user screen shot includes a screen of a homepage related to a hotel booking service, the system 1000 may determine the type of the task as 'booking the hotel through the homepage for the hotel booking service provided on the screen of the homepage'.

In this case, the system 1000 may automatically perform a series of actions (e.g., cursor movement, clicks, text input, etc.), required to perform the task determined, on the user screen.

However, the present disclosure is not limited thereto, but the task determined based on the task-oriented dialogue may be determined as numerous types according to contents of the user dialogue input and the response dialogue. For example, the task may be determined as various types such as product purchase, email sending, information search, and document creation.

Furthermore, when the type of task is determined based on the context of the task-oriented dialogue according to an embodiment, the system 1000 may determine at least one task performing model optimized to, or best suited to, perform the task of which type is determined based on the task-oriented dialogue among a plurality of task performing models, and perform the task by using at least one determined task performing model.

The method in which the system 1000 determines at least one task performing model optimized to the task, and performs the task by using the determined task performing model may be substantially the same as an 'MoE based model specifying method' to be described later.

In addition, for example, the system 1000 may include a first type of a first user computing device 180, a second type of a second user computing device 181, a third type of a third user computing device 182, and a fourth type of a fourth user computing device 183, which can receive various types of user conversation input from a user or various types of user dialogue inputs from the user.

Here, the user dialogue input may have one or more types of text, voice, gesture, or touch. However, the present disclosure is not limited thereto, and the user dialogue input according to an embodiment of the present disclosure may have various types other than the examples listed above.

For instance, the first type of the first user computing device 180 may be a virtual reality electronic device, the second type of the second user computing device 181 may be a mobile electronic device, the third type of the third user computing device 182 may be an augmented reality electronic device, and the fourth type of the fourth user computing device 183 may be a desktop.

However, the present disclosure is not limited thereto, and the system 1000 according to an embodiment of the present disclosure may include various types of user computing devices, which may receive the user dialogue input, other than the examples listed above.

## USER COMPUTING DEVICE OR USER COMPUTER 110

The user computing device or user computer 110 may include various types of computing devices such as a smart phone, a cellular phone, a digital broadcasting device, personal digital assistants (PDA), a portable multimedia player (PMP), a desktop, a laptop, a wearable device, an embedded computing device, a tablet PC, an augmented reality (AR) device, and/or a virtual reality (VR) device.

The user computing device 110 may include one or more processors 111 and memories 112. Here, the processor 111 may be constituted by at least one of a central processing unit (CPU), a graphic processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and electric units for performing required functions or a plurality of processors which are electrically connected.

For example, the ASICs may have a structure of an array-type neuromorphic circuit, including a plurality of neuron circuits.

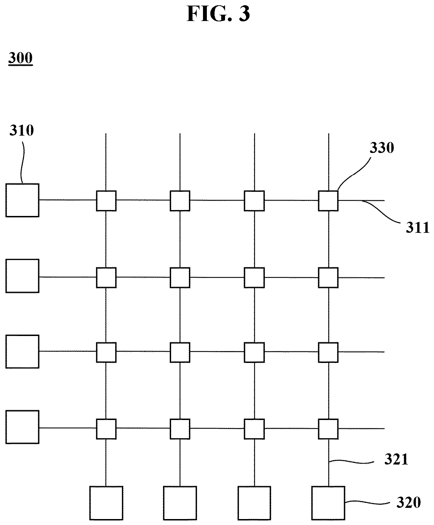

Referring to FIG. 3, for example, a neuromorphic circuit 300 may include a plurality of pre-synaptic neuron circuits 310, a plurality of pre-synaptic lines 311 extending from the plurality of pre-synaptic neuron circuits 310 in a first direction such as a transverse direction, a plurality of post-synaptic neuron circuits 320, a plurality of post-synaptic lines 321 extending from the plurality of post-synaptic neuron circuits 320 in a second direction such as a longitudinal direction (e.g. a direction different from or perpendicular to the first direction), and a plurality of synapse circuits 330 provided at intersections of the plurality of pre-synaptic lines 311 and the plurality of post-synaptic lines 321.

The plurality of pre-synaptic neuron circuits 310 may transmit a signal input from the outside of the neuromorphic circuit 300 to the plurality of synapse circuits 330 through the plurality of pre-synaptic lines 311 in the form of an electric signal.

Further, the plurality of post-synaptic neuron circuits 320 may transmit an electric signal from the plurality of synapse circuits 330 through the plurality of post-synaptic lines 321.

Furthermore, the plurality of post-synaptic neuron circuits 320 may also transmit an electric signal to the plurality of synapse circuits 330 through the plurality of post-synaptic lines 321.

The plurality of synapse circuits 330 may store weights included in layers constituting a neural network system implemented by the neuromorphic circuit 300, and perform a predetermined operation based on the weights and input data.

For example, each of the plurality of synaptic circuits 330 may include a resistance memory cell having a variable resistance. In this case, resistance values may be changed by voltages through the plurality of pre-synaptic neuron circuits 310 or the plurality of post-synaptic neuron circuits 320, and the plurality of synapse circuits 330 may store weight data according to the resistance changes.

The neuromorphic circuit 300 has simulating neurons and synapse structures which are essential elements of a human brain. When a deep neural network (DNN) is implemented by using the neuromorphic circuit 300, a data processing speed may be enhanced, and power consumption may be reduced compared to an existing case of utilizing only a phone noise structure.

The memory 112 may include one or more non-transitory/transitory computer-readable storage media including a RAM, a ROM, an EEPROM, an EPROM, a flash memory device, a magnetic disk, etc., and combinations thereof. The memory 112 may include a web storage of a server which performs a storage function of the memory on a network or the Internet. The memory 112 may store data 113 and instructions 114 required for one or more processors 111 to perform a functional operation such as the train of the artificial intelligence model or the execution of a vision examination through the artificial intelligence model.

In an embodiment, the user computing device 110 may store one or more machine learning models 120.

For example, the machine learning models 120 may be various types of machine learning models such as a plurality of neural networks (e.g., a deep neural network) for performing the task-oriented dialogue method and the task performing method, or other types of machine learning models including a non-linear model and/or a linear model, and may be constituted by combinations thereof.

For example, the machine learning model may store a linear regression, a crystal tree, a random forest, a gradient boosting pre-trained language model, or/and an in-depth learning model. In addition, the neural network may include one or more of feed-forward neural networks, recurrent neural networks (e.g., long/short-term memory recurrent neural networks), convolution neural networks, or/and other types of neural networks.

Further, according to various embodiments, the user computing device 110 may store a model used in each process and a prompt template which becomes a basis of an input in the model in order to perform at least some of processes performed for the task-oriented dialogue method and the task performing method through a large language model (LLM).

In an embodiment, the user computing device 110 receives one or more machine learning models 120 from the server computing system 130 through the network 170, stores the received machine learning models 120 in the memory 112, and then executes the stored machine learning models 120 in the processor 111 to perform a dialogue dataset analysis.

In another embodiment, the server computing system 130 may include one or more machine learning models 140, and perform operations through the machine learning models 140, and may provide a task-oriented dialogue service and a task performing service to the user by communicating with the user computing device 110 by a scheme of communicating data related to the operations with the user computing device 110.

For example, the user computing device 110 may perform the task-oriented dialogue service by a scheme in which the server computing system 130 provides an output for an input of the user by using the machine learning model 140.

Further, the artificial intelligence model may also be implemented by a scheme in which at least some of the machine learning models 120 and/or 140 are executed by the user computing device 110, and the remaining one or more of the machine learning models 120 and/or 140 are executed by the server computing system 130.

Further, the user computing device 110 may include one or more input components 121 configured to sense or receive the input of the user. For example, the user input component 121 may include a touch sensor (e.g., a touch screen and/or a touch pad) configured to sense a touch of an input medium (e.g., a finger or a stylus) of the user, an image sensor configured to capture or senses a motion input of the user, a microphone configured to sense a user voice input, a button, a mouse, and/or a keyboard. Further, when the user input component 121 receives an input through an external controller (e.g., the mouse and/or the keyboard) through an interface, the user input component 121 may include the interface and the external controller.

## SERVER COMPUTING SYSTEM 130

The server computing system 130 may perform a series of processes for providing the task-oriented dialogue service.

Further, the server computing system 130 may perform a series of processes for providing the task performing service based on the context of the task-oriented dialogue.

In detail, in an embodiment, the server computing system 130 may provide the task-oriented dialogue service by exchanging data required to allow an external device such as the user computing device 110 to drive the task-oriented dialogue service and task performing service processes with the external device.

In more detail, in an embodiment, the server computing system 130 may provide an environment in which an application for providing the task-oriented dialogue service and the task performing service may operate in the user computing device 110.

To this end, the server computing system 130 may include an application program, data, and/or instructions for operating the application, and transmit and receive various data based on the application program, data, and/or instructions to and from the external device.

The server computing system 130 may include one or more processors 131 and memories 132. Here, the processor 131 may comprise one or more of a central processing unit (CPU), a graphic processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, or electric units for performing required functions or a plurality of processors which are electrically connected.

For example, the ASICs may have a structure of an array-type neuromorphic circuit, including a plurality of neuron circuits (see FIG. 3).

In addition, the memory 132 may include one or more of non-transitory/transitory computer-readable storage media including a RAM, a ROM, an EEPROM, an EPROM, a flash memory device, a magnetic disk, etc., and combinations thereof. The memory 132 may store data 133 and instructions 134 required for the processors 131 to perform a functional operation such as the train of the artificial intelligence model or the execution of the task-oriented dialogue method and the task performing method through the artificial intelligence model.

In an embodiment, the server computing system 130 may be implemented to include one or more computing devices or computers. For example, the server computing system 130 may be implemented so that a plurality of computing devices operate according to sequential computing architecture, parallel computing architecture, or a combination thereof. Further, the server computing system 130 may include a plurality of computing devices connected through the network 170.

Further, the server computing device 130 may store one or more machine learning models 140. For example, the server computing system 130 may include a neural network and/or multilayer non-linear model as the machine learning model 140. An exemplary neural network may include a feed-forward neural network, a deep neural network, a recurrent neural network, and a convolution neural network.

In an embodiment, the server computing system 130 may further include a data store computing system (hereinafter, referred to as a data store) which is a storage for storing and managing raw data which is a basis of the task-oriented dialogue service.

The data store may include various types of data storages including a file system and a cloud storage. For example, the data store may include one or more databases of a relational database using a structuralized query language (SQL) to define and manipulate data, an NoSQL database designed for flexibility and scalability, and processing non-formal and semi-formal data, a data warehouse as a system used for reporting and data analysis, which is optimized for query and analysis by centralizing mass data of various sources, a data warehouse storing mass raw data as structuralized data, semi-structuralized data, and non-structuralized data which are basic formats, a local storage device storing data in a file in a format which may generally access a computer operating system, or a network attached storage (NAS).

**TRAINING COMPUTING SYSTEM 150**

The training computing system 150 may include one or more processors 151 and memories 152. For example, the processor 151 may comprise one or more of a central processing unit (CPU), a graphic processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, or electric units configured to perform necessary functions or a plurality of processors which are electrically connected.

For example, the ASICs may have a structure of an array-type neuromorphic circuit, including a plurality of neuron circuits (see FIG. 3).

In addition, the memory 152 may include one or more of non-transitory/transitory computer-readable storage media including a RAM, a ROM, an EEPROM, an EPROM, a flash memory device, a magnetic disk, etc., or combinations thereof. The memory 152 may store data 153 and instructions 154 required for the processor 151 to perform training of the artificial intelligence model, etc.

For example, the training computing system 150 may include a model trainer 160 configured to train the machine learning models 120 and/or 140 stored in the user computing device 110 and/or the server computing system 130 by using various training or learning techniques such as backpropagation of an error.

For example, the model trainer 160 may perform updating one or more parameters of the machine learning models 120 and/or 140 for the task-oriented dialogue service based on a defined loss function by a backpropagation scheme.

In some implementation examples, the performance of the backpropagation of the error may include performing truncated backpropagation through time. The model trainer 160 may perform multiple generalization techniques (e.g., weight reduction, drop-out, and/or knowledge distillation) in order to enhance a generalization capability of the trained machine learning models 120 and/or 140.

For example, the model trainer 160 may train the machine learning models 120 and/or 140 based on a series of training data 161. Here, the training data 161 may include, for example, different formats of data such as an image, an audio, and/or text.

Further, the training data 161 may include, for example, various types of dialogue data. In this case, the dialogue data may be data related to a task-oriented dialogue which provides a specific task and provides a response to the requested task.

Examples of image type data which may be used may include a video frame, LiDAR point cloud, an X-ray image, a computer tomography scan, a hyperspectral image, and/or various other types of images.

The training data 161 may be provided by the user computing device 110 and/or the server computing system 130. When the training computing device 150 trains the machine learning models 120 and/or 140 with respect to specific data of the user computing device 110, the machine learning models 120 and/or 140 may be characterized as a personalized model.

In addition, the model trainer 160 includes a computer logic utilized to provide a desired function.

Further, the model trainer 160 may be implemented as hardware, firmware, and/or software controlling a universal processor. In one implementation example, the model trainer 160 may include a program file stored in a storage device, and may be loaded to the memory 152 and executed by one or more processors 151. In another implementation example, the model trainer 160 includes one or more sets of computer-executable data 153 and instructions 154 stored in executable by a tangible computer-readable storage medium such as a RAM hard disk or an optical or magnetic medium.

The network 170 includes a 3rd Generation Partnership Project (3GPP) network, a Long Term Evolution (LTE) network, a World Interoperability for Microwave Access (WIMAX) network, Internet, a Local Area Network (LAN), Wireless Local Area Network (LAN), a Wide Area Network (WAN), a Personal Area Network (PAN), a Bluetooth network, a satellite broadcasting network, an analog broadcasting network, and/or a Digital Multimedia Broadcasting (DMB) network, etc., but is not limited thereto.

In general, communication through the network 170 may be performed through various communication protocols (e.g., TCP/IP, HTTP, SMTP, and/or FTP, etc.), encoding or formats (e.g., HTML and/or XML, etc.), and/or protective schemas (e.g., VPN, secure HTTP, and/or SSL, etc.) by using any type of wired and/or wireless communication.

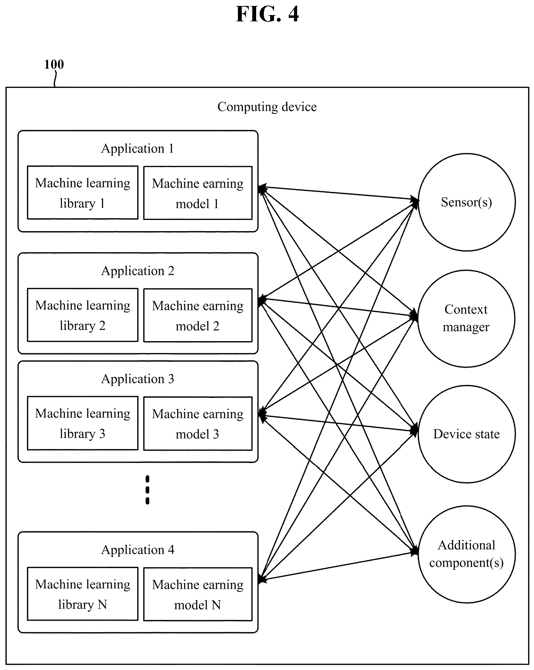

FIG. 4 is a block diagram of a computing device or computer 100 which implements the task-oriented dialogue service and the task performing service according to an embodiment of the present disclosure.

Referring to FIG. 4, the computing device or computer 100 may be included in the user computing device 110, the server computing system 130, and/or the training computing system 150. The computing device 100 includes multiple applications (e.g., applications 1 to N). Each application may include a machine learning library and one or more machine learning models. For example, the application may include an application for image processing (e.g., detection, classification, and/or segmentation), a text messaging application, an email application, a dictation application, a virtual keyboard application, a browser application, and/or a chat-bot application.

In an embodiment, the computing device 100 may include the model trainer 160 configured to train the artificial intelligence model, and store and operate the trained artificial intelligence model to provide output data according to predetermined input data (for instance, a dialogue dataset in an embodiment of the present disclosure).

Each application of the computing device 100 may communicate with, for example, multiple other components of the computing device 100, such as one or more sensors, context managers, device state components, and/or other components. In an embodiment, each application may communicate with each device component by using an API (e.g., a public API). In an embodiment, the API used by each application may be specific for the corresponding application.

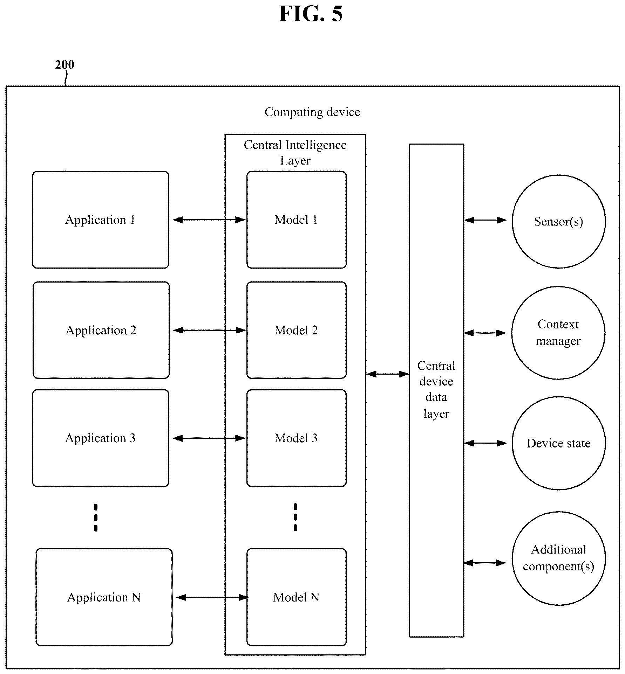

FIG. 5 is a block diagram of a computing device or computer 200 which implements the task-oriented dialogue service and the task performing service according to another embodiment of the present disclosure.

Referring to FIG. 5, the computing device or computer 200 includes multiple applications (e.g., applications 1 to n N). Each application may communicate with a central intelligence layer. For example, the applications may include an image processing application, a text message application, an email application, a dictation application, a virtual keyboard application, and/or a browser application. In an embodiment, each application may communicate with the central intelligence layer (and a model stored therein) by using an API (e.g., a common API for all applications).

The central intelligence layer may include multiple machine learning models. For example, as illustrated in FIG. 5, at least some of the respective machine learning models may be provided for each application, and managed by the central intelligence layer. In another implementation example, two or more applications may share a single machine learning model. For example, in some implementation examples, the central intelligence layer may provide a single model for all applications. In some implementation examples, the central intelligence layer may be included in an operating system of the computing device 200 or implemented differently therefrom.

The central intelligence layer may communicate with a central device data layer. The central device data layer may a centralized data storage for the computing device 200. As illustrated in FIG. 5, the central device data layer may communicate with multiple other components of the computing device 200, such as one or more sensors, context managers, device state components, and/or other components. In some implementation examples, the central device data layer may communicate with each device component by using an API (e.g., a private API).

The description of the techniques related to some embodiments of the present disclosure may refer to information sent from servers, databases, software applications and other computer-based systems, as well as taken action and information transmitted to a system or transmitted from the system. An inherent flexibility of the computer-based systems will perceive that extensive possible components, combinations, division of combinations and tasks and a functionality between components and from the components are permitted. For example, the processes described in certain embodiments of the present disclosure may be implemented by using a single device or component or multiple devices or components which operate as combinations. Databases and applications may be implemented in a single system or be distributed over multiple systems. The distributed components may operate in sequence or in parallel.

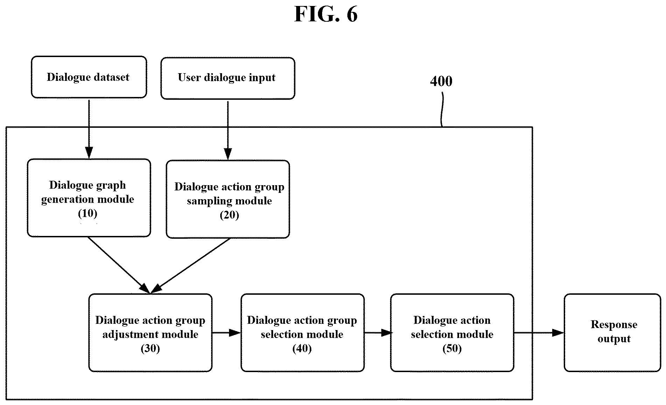

FIG. 6 is a block diagram for describing a function of a computing device or computer 400 which implements the task-oriented dialogue service according to an embodiment of the present disclosure.

Referring to FIG. 6, the computing device or computer 400 may include a dialogue graph generation module 10, a dialogue act group sampling module 20, a dialogue act group adjustment module 30, a dialogue act group selection module 40, and a dialogue act selection module 50.

The dialogue graph generation module 10 may generate a dialogue graph based on a dialogue dataset received from the outside of the computing device 400.

The dialogue dataset may include data related to dialogues between various speakers which may be made in various environments. For example, the dialogue dataset may include data related to various types of series of dialogues including a dialogue between a customer and a booking counselor in a situation of booking a hotel, a dialogue between a purchaser and a seller in a situation of purchasing a product, a dialogue between a tutor and a tutee which perform a dialogue for an academic task, etc.

The dialogue graph which models relationships between various types of utterances included in the dialogue dataset, and expresses the modeled relationships in the form of a graph may include a plurality of nodes corresponding to a plurality of dialogue acts representing a function of a specific utterance and a plurality of edges representing various information on relationships between the plurality of dialogue acts.

Here, for example, the dialogue acts may include various types of utterance functions including question, information, request, confirmation, and so on.

Further, the relationships between the plurality of dialogue acts may include a predetermined conditional relationship between two utterances. For example, the predetermined conditional relationship may include one or more of a first conditional relationship (should relationship) indicating what utterance should occur for one utterance in a dialogue flow, a second conditional relationship (can relationship) indicating what utterance can occur for one utterance in a dialogue flow, or a third conditional relationship (should-not relationship) indicating what utterance should not occur for one utterance in a dialogue flow.

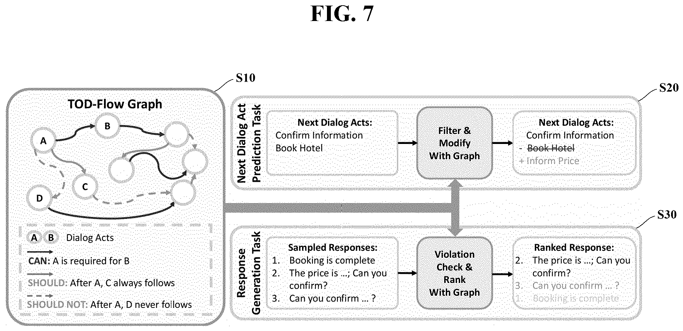

For example, referring to FIG. 7, the dialogue graph generation module 10 may generate a task-oriented dialogue flow (TOD-flow) graph including a plurality of nodes including A, B, C, and D, and a plurality of edges corresponding to relationships between the plurality of nodes (S10).

The dialogue graph generation module 10 may vectorize the dialogue dataset by performing embedding words and sentences included in the dialogue dataset. The dialogue graph generation module 10 may learn related information of the dialogue dataset such as an intent of an utterance of the dialogue, a dialogue act, a slot, a value, context information, information on a relationship between utterances, a pattern of a sequential dialogue flow, etc. by analyzing the vectorized dialogue dataset.

For example, the dialogue graph generation module 10 may learn the related information of the dialogue dataset by using an artificial intelligence model based on one or more of a transformer based model, a recurrent neural network (RNN), or a long short-term memory (LSTM).

Further, the dialogue graph generation module 10 may generate the dialogue graph by modeling at least one conditional relationship for the dialogue dataset based on the learned related information of the dialogue dataset.

In this case, the dialogue graph generation module 10 may model at least one relationship for the dialogue dataset by maximizing a loss function optimized for each of one or more conditional relationships.

For example, the dialogue graph generation module 10 can generate a dialogue graph by utilizing a dialogue graph generation model learned so that the expected value of the case where the n-th dialogue act in the dialogue context satisfies the first conditional relationship (should relationship) is maximized.

In detail, the dialogue graph generation module 10 can generate a dialogue graph by utilizing a dialogue graph generation model learned so that the expected value of the case where the n-th dialogue act satisfies the first conditional relationship (should relationship) in a situation where the first conditional relationship (should relationship) of the dialogue context must be satisfied is maximized.

For example, the dialogue graph generation module 10 may model the first conditional relationship (should relationship) indicating what utterance should occur for one utterance in the dialogue flow by maximizing a loss function defined by Equation 1 below.

**[Equation 1]**

$$J_{\mathsf{Shd}} = \mathbb{E}_{(\mathbf{c}, a[n])}\left[\mathbb{I}\left(a[n] = 1 \mid f_n^{\mathsf{Shd}}(\mathbf{c}) = 1\right)\right]$$

( $f_n^{Shd}(c) = 1$ indicates that the first conditional relationship is satisfied, $a[n] = 1$ indicates that an n-th dialogue act is executed, and c represents information related to a state of the corresponding n-th dialogue act).

In addition, for example, the dialogue graph generation module 10 can generate a dialogue graph by utilizing a dialogue graph generation model learned so that the expected value of the case where the n-th dialogue act in the dialogue context satisfies the second conditional relationship (can relationship) and at the same time does not satisfy the third conditional relationship (should-not relationship) is maximized.

In detail, the dialogue graph generation module 10 can generate a dialogue graph by utilizing a dialogue graph generation model learned so that the sum of the first expected value in the case where the nth dialogue act satisfies the second conditional relationship (can relationship) and does not satisfy the third conditional relationship (should-not relationship) in the dialogue context in a situation where the n-th dialogue act occurs already can be maximized, and the second expected value in the case where the n-th dialogue act does not satisfy the second conditional relationship (can relationship) and satisfies the third conditional relationship (should-not relationship) in the dialogue context in a situation where the n-th dialogue act does not occur can be maximized.

For example, the dialogue graph generation module 10 may model the second conditional relationship (can relationship) indicating what utterance can occur for one utterance in the dialogue flow and the third conditional relationship (should-not relationship) indicating what utterance should not occur for one utterance in the dialogue flow by maximizing a loss function defined by Equation 2 below.

**[Equation 2]**

$$
J_{\text{Can}\wedge\neg\text{Shdnt}}
$$
$$
= \mathbb{E}_{(\mathbf{c},a[n])}\left[\mathbb{I}[f_n^{\text{Can}\wedge\neg\text{Shdnt}}(\mathbf{c}) = 1 | a[n] = 1]\right.
$$
$$
\left. + \alpha\ \mathbb{I}[f_n^{\text{Can}\wedge\neg\text{Shdnt}}(\mathbf{c}) = 0 | a[n] = 0]\right],
$$

( $f_n^{\text{Can}\wedge\neg\text{Shdnt}}(c) = 1$ indicates that the second conditional relationship and the third conditional relationship are satisfied, $a[n] = 1$ indicates that an n-th dialogue act is executed, and c represents information related to the state of the corresponding n-th dialogue act).

The dialogue act group sampling module 20 may sample a plurality of dialogue act groups for responding to a user dialogue input received from the outside of the computing device 400.

For example, the dialogue act group sampling module 20 may sample a plurality of appropriate dialogue act groups as a response to a user dialogue input received from an electronic device. Referring to FIG. 7, next dialogue act prediction may be performed for the user dialogue input. For example, for a user dialogue input related to 'book hotel', the dialogue act group sampling module 20 may sample a dialogue act group including various types of dialogue acts such as 'confirming information' and 'booking hotel' as a dialogue act group which is a response subsequent to the user dialogue input (S20).

The dialogue act group sampling module 20 may include an artificial neural network structure which may extract features of various types of dialogue datasets, and pre-learn the extracted features, and provide appropriate output data for input data. For example, the dialogue act group sampling module 20 may include transformer based neural network architecture (e.g., GPT-3, GPT-4, BERT-series model, etc.).

The dialogue act group adjustment module 30 may adjust a plurality of dialogue act groups based on the generated dialogue graph.

Each of the plurality of dialogue act groups generated by the dialogue act group generation module 20 may include at least one dialogue act related to the user dialogue input.

The dialogue act group adjustment module 30 may adjust the plurality of dialogue act groups based on whether each of the plurality of dialogue act groups generated by the dialogue act group generation module 20 satisfies at least one conditional relationship included in the dialogue graph or the user dialogue input.

For example, the dialogue act group adjustment module 30 may determine whether each of the plurality of dialogue act groups satisfies the first conditional relationship (should relationship) for the user dialogue input, and add one dialogue act which satisfies the first conditional relationship (should relationship) for the user dialogue input to one dialogue act group which does not satisfy the first conditional relationship (should relationship).

Further, the dialogue act group adjustment module 30 may determine whether each of the plurality of dialogue act groups satisfies the second conditional relationship (can relationship) and the third conditional relationship (should-not relationship) for the user dialogue input, and remove one dialogue act which does not satisfy the second conditional relationship (can relationship) and the third conditional relationship (should-not relationship) among one or more dialogue acts included in one dialogue act group which does not satisfy the second conditional relationship (can relationship) and the third conditional relationship (should-not relationship).

As described above, the sampled plurality of dialogue act groups are adjusted by the dialogue act group adjustment module 30 to suit the dialogue graph (S20), thereby improving the reliability of the task-oriented dialogue service provided by the system 1000 and control power for the dialogue model.

The dialogue act group selection module 40 may select one dialogue act group which satisfies a predetermined condition among the plurality of adjusted dialogue act groups.

For example, the dialogue act group selection module 40 may determine rankings for the plurality of dialogue act groups in order of most dialogue acts which satisfy at least one conditional relationship of the dialogue graph among the plurality of adjusted dialogue act groups (S30).

For example, a first dialogue group, a second dialogue act group, and a third dialogue act group may be adjusted by the dialogue act group adjustment module 30, and after the adjustment task of the dialogue act group adjustment module 30 is completed, the first dialogue act group may include three dialogue acts, the second dialogue act group may include two dialogue acts, and the third dialogue act group may include four dialogue acts.

In this case, the dialogue act group selection module 40 may select, as a first rank, the third dialogue act group including the largest dialogue acts after being adjusted based on at least one conditional relationship of the dialogue graph among the first to third dialogue act groups.

The dialogue act selection module 50 may select one of dialogue acts included in one dialogue act group selected among the plurality of dialogue act groups, and provide a response output to the user dialogue input.

For example, the dialogue act selection module 50 may calculate a relevancy to the user dialogue input of at least one dialogue act included in one selected dialogue act group as a probability. Thereafter, the dialogue act selection module 50 may select one dialogue act in which a probability corresponding to a relevancy to the user dialogue input is calculated to be highest from one selected dialogue act group, and provide the selected dialogue act to the user as the response.

## ARTIFICIAL INTELLIGENCE AGENT SPECIALIZATION MODEL (AIAM)

The computing system 1000 may include an AI agent specialization model (AIAM) according to an embodiment.

Here, according to an embodiment of the present disclosure, the AIAM as an AI agent model to which mixture of experts (MoE) architecture implemented according to an embodiment is applied may be an artificial intelligence model including a data processing algorithm which may autonomously act in a specific environment, solve a task, and achieve a goal. Here, the MoE may be architecture of a machine learning model which solves complex problems by combining multiple expert models.

Such an AIAM may include a data processing algorithm for implementing a cognitive ability of collecting and interpreting data from a given environment, a decision mechanism of deciding an optimal action based on the collected data, an execution ability of executing the decided action, and a learning ability of improving the action through experience.

As an embodiment, the AIAM may acquire predetermined input data (e.g., text, voice, image, moving picture, and/or specific sensor based sensing data), and output data (e.g., response data to a specific query and/or a control signal according to a specific instruction) by performing a predetermined task based on the acquired input data.

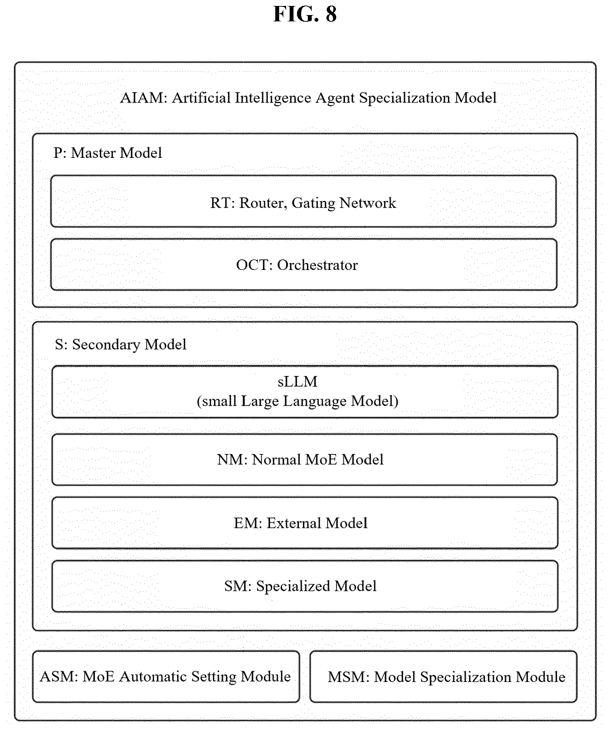

FIG. 8 illustrates a block diagram of an artificial intelligence (AI) agent model according to an embodiment of the present disclosure.

Referring to FIG. 8, the AI agent model according to an embodiment may include one or more of a router (router, gating network (RT), orchestrator OCT, small large language model (sLLM), normal MoE model (NM), external model (EM), and/or specialized model (SM).

In an embodiment of FIG. 8, the AI agent model includes the components described above in order to prevent a feature from being blurred.

However, according to some embodiments of the present disclosure, those skilled in the art may appreciated that other universal components other than the components illustrated in FIG. 8 may be further included or some components illustrated in FIG. 8 may be omitted.

In more detail, the router (router, gating network) according to an embodiment may be an artificial intelligence module that performs task allocation and/or traffic adjustment for a plurality of models in the MoE architecture.

Specifically, the router RT analyzes given input data and/or request task to determine which model is most appropriate to the corresponding data processing.

In an embodiment, the router RT may determine a model optimized to the processing of given data based on the performance, specialty, and/or previous experience of each model.

Further, the router RT distributes the given task to one or more models by considering a system load to support efficient data processing.

Moreover, the router RT may adjust a task allocated to a specific model by flexibly responding to real-time system change.

In an embodiment, the router RT may be an artificial intelligence module configured to selectively determine a model (hereinafter, referred to as a domain-specific specialized model) which executes a data processing operation optimized to a predetermined domain.

That is, in the embodiment, the router RT may be an artificial intelligence model which selects a model (i.e., a domain-specific specialized model) that is determined to perform data processing (for example, deep learning in an embodiment) most suitable for a given domain among the plurality of models included in the AIAM.

For reference, the domain according to an embodiment may be data, a rule, a terminology, a problem definition, and/or a process used to perform a task specified by a predetermined AI system.

As an embodiment, the router RT performs data analysis based on a feature of predetermined input data (e.g., a user input and/or specific sensing data) and/or a request task, determines a data processing feature optimized to the corresponding task based thereon, and detects a predetermined model which implements the determined data processing feature to determine the domain-specific specialized model.

In other words, the router RT according to an embodiment may be an artificial intelligence module configured to detect a model which may most effectively perform data processing according to a given domain, and allocate or distribute a corresponding task processing task, and manage the allocated or distributed task processing task.

At this time, the router RT according to an embodiment may include a router RT pre-trained according to a disclosed predetermined algorithm, a router RT additionally trained according to an embodiment, and/or a router RT newly trained by a new scheme.

Meanwhile, the orchestrator OCT according to an embodiment may be an artificial intelligence module configured to control and manage an overall configuration of the AIAM.

In detail, in an embodiment, the orchestrator OCT may allocate various tasks generated in an entire system to an appropriate resource (for instance, a router RT and/or a predetermined model in an embodiment).

Further, the orchestrator OCT may manage resources such as a usable model and a hardware resource (e.g., a CPU and/or a GPU) to be efficiently used.

Further, the orchestrator OCT monitors a performance of the entire system to adjust a specific parameter as necessary or optimize a network configuration.

Further, the orchestrator OCT may manage interlocking or connection between a plurality of routers RT and/or models, and control a data flow and processing process.

For instance, in an embodiment, the orchestrator OCT may perform control and management of the entire system of the AIAM, and perform a role of a main router RT which controls at least one router RT.

At this example, the orchestrator OCT and the router RT according to an embodiment closely interlock or connect with each other to support an efficient operation of an MoE system.

Specifically, the orchestrator OCT as a manager of the entire system may monitor the performance of the router RT, and adjust a strategy of the router RT as necessary.

On the other hand, the router RT may implement efficient system control by substantially performing the allocation of the data processing task according to an instruction and/or a self-algorithm of the orchestrator OCT.

In an embodiment, the orchestrator OCT and/or router RT described above may be a master model P which may control and manage other components of the AIAM or the entire system (e.g., a small large language model (sLLM), a normal MoE model (NM), an external model (EM), and/or a specialized model (SM)).

Meanwhile, the small large language model (sLLM) according to an embodiment may be an artificial intelligence module implemented as a lightweight version of a large language model (LLM).

That is, the sLLM may be an artificial intelligence module constructed to implement similar performance to a large model such as the LLM with a smaller number of resources than the LLM.

In an embodiment, the sLLM may include an MoE model (e.g., MoELM in an embodiment) based on the combination of a plurality of specialized models SM and routers RT. Moreover, the sLLM may include an MoE model (for example, a DMoE model in an embodiment) based on the domain-specific specialized model according to an embodiment.

Further, the normal MoE model (NM) according to an embodiment of the present disclosure may mean a predetermined MoE model implemented according to a disclosed universal scheme.

For example, the NM may include a switch transformer, conditional computation in neural networks, sparse mixture of experts, and/or megatron-LM.

Further, the external model (EM) according to an embodiment may be a predetermined artificial intelligence model implemented according to various disclosed algorithms.

For example, the EM may include ChatGPT, Gemini, and/or Llama.

In an embodiment, the EM may be selectively used as necessary, and may support the processing of a given task.

Further, according to an embodiment, the specialized model (SM) as an artificial intelligence model in which optimization learning for a specific task is performed may be an artificial intelligence trained according to training data and a training scheme specialized to the corresponding task.

That is, the SM may be an artificial intelligence model trained according to training data and a training scheme specialized to achieve a predetermined task.

In an embodiment, the SM may include one or more predetermined models (such as MoELM and/or DMoE model), a normal MoE model (NM), and/or an external model (EM) which is/are trained. Moreover, the specialized model (SM) may include a specialized module model according to an embodiment disclosed according to an 'MoE based model specifying method' to be described later. A detailed description thereof is described in the 'MoE based model specifying method'.

In an embodiment, the sLLM, NM, EM, and/or SM described above may be a secondary model S which may perform a specific task according to control and management of the master model P (i.e., the orchestrator OCT and/or the router RT) of the AI agent model.

## TASK-ORIENTED DIALOGUE METHOD S100

Hereinafter, a task-oriented dialogue method S100 will be described in detail. The task-oriented dialogue method S 100 extracts and learns features of various types of dialogue datasets, generates a dialogue graph which models a predetermined conditional relationship for the dialogue dataset based on the extracted and learned features, and selects an optimal dialogue act among a plurality of dialogue acts in which a pre-trained dialogue model samples for a user dialogue input based on the dialogue graph and provides the selected optimal dialogue act as a response to provide a more accurate response to the user dialogue input.

The dialogue dataset may include data related to dialogues between various speakers which may be made in various environments. Accordingly, the dialogue dataset may include various types of data according to a property of a dialogue made between speakers.

For example, a first dialogue dataset and a second dialogue dataset related to different types of tasks may include different types of data. A data structure of a first dialogue graph generated based on the first dialogue dataset and a data structure of a second dialogue graph generated based on the second dialogue dataset may be different from each other.

The dialogue graph which models relationships between various types of utterances included in the dialogue dataset, and expresses the modeled relationships in the form of a graph may be data having a form in which data regarding a plurality of dialogue acts corresponding to functions, intents, etc., of a plurality of utterances and data regarding conditional relationships between the plurality of dialogue acts are structuralized.

The task-oriented dialogue method S100 may filter and provide an optimal dialogue act group as a response to a user dialogue input among a plurality of dialogue act groups in which a dialogue model samples based on the dialogue graph.

Further, a task requested by a user may be determined based on the dialogue act group filtered by the user dialogue input and the response, and the computing system 1000 according to an embodiment performs the determined task to provide a task performing service to the user.

Hereinafter, the task-oriented dialogue method S100 will be described in detail, in which the dialogue model may provide an appropriate response to the user dialogue input based on a dialogue graph of modeling at least one conditional relationship for the dialogue dataset by the computing system 1000 according to an embodiment, and perform the task requested by the user.

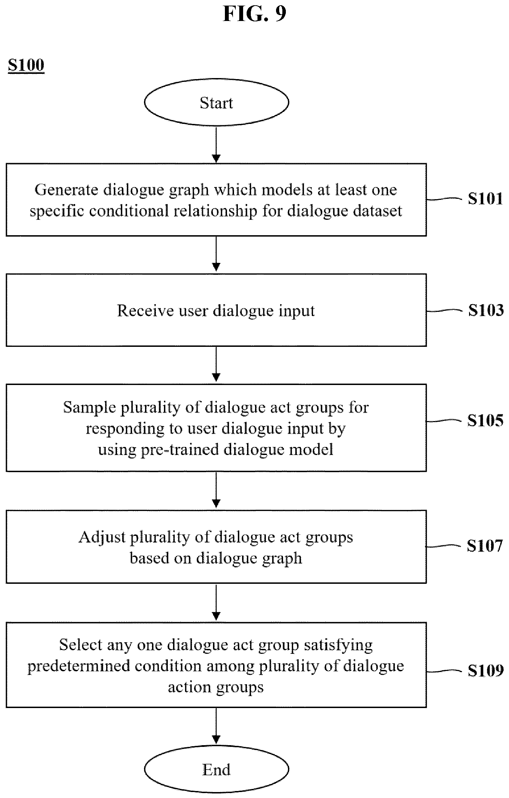

FIG. 9 is a flowchart of a task-oriented dialogue method S100 according to an embodiment of the present disclosure.

Referring to FIG. 9, the task-oriented dialogue method S100 according to an embodiment may include step S101 of generating a dialogue graph of modeling at least one conditional relationship for a dialogue dataset, step S103 of receiving a user dialogue input, step S105 of sampling a plurality of dialogue act groups for responding to the user dialogue input by using a pre-trained dialogue model, step S107 of adjusting the plurality of dialogue act groups based on the dialogue graph, and step S109 of selecting one dialogue act group which satisfies a predetermined condition among the plurality of dialogue act groups.

In step S101, processors 111 and 131 of the system 1000 may generate the dialogue graph based on various types of dialogue datasets.

For example, the processors 111 and 131 may generate a first dialogue graph of modeling at least one conditional relationship for a first type of dialogue dataset related to a first task. Further, the processors 111 and 131 may generate a second dialogue graph of modeling at least one conditional relationship for a second type of dialogue dataset related to a second task different from the first task.

Here, the conditional relationship for the dialogue dataset may include one of a first conditional relationship (should relationship) indicating what utterance should occur for one utterance in a dialogue flow, a second conditional relationship (can relationship) indicating what utterance can occur for one utterance in a dialogue flow, and a third conditional relationship (should-not relationship) indicating what utterance should not occur for one utterance in a dialogue flow.

In step S 103, the processors 111 and 131 of the system 1000 may receive the user dialogue input.

For example, the processors 111 and 131 may receive data of a user dialogue input which a user computing device 110, which may be implemented as various types of electronic devices, receives through a user input component 121.

In step S105, the processors 111 and 131 of the system 1000 may sample a plurality of dialogue act groups to be provided as a response to the user dialogue input by using the pre-trained dialogue model.

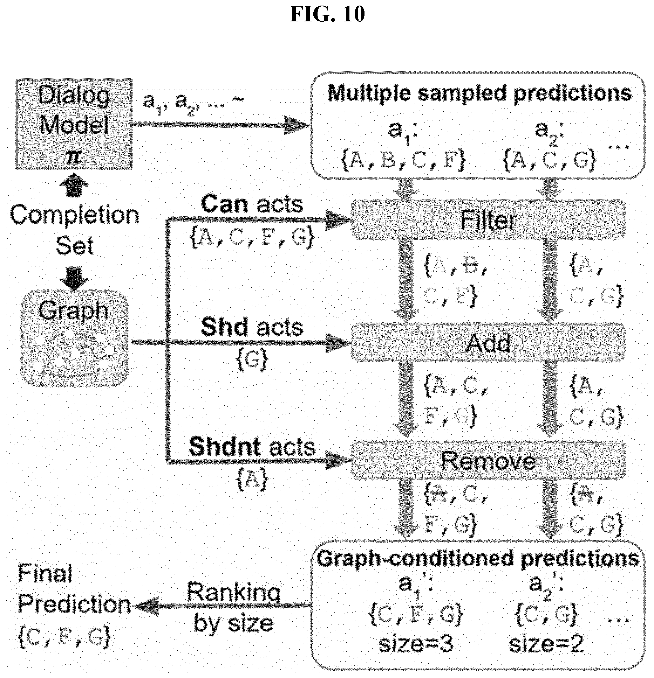

For example, referring to FIG. 10, the processors 111 and 131 may sample a plurality of dialogue act groups (ai, $a_2$, ...) by using a dialogue model $\pi$ pre-trained by a model trainer 160 of a training computing system 150. In this example, the number of the plurality of dialogue act groups (ai, $a_2$, ...) sampled by the dialogue model $\pi$ may be dozens, but not limited thereto.

For example, a sampled first dialogue act group $a_1$ may include four dialogue acts A, B, C, and F, and a second dialogue act group $a_2$ may include three dialogue acts A, C, and G.

In step S107, the processors 111 and 131 of the system 1000 may adjust the plurality of sampled dialogue act groups based on the dialogue graph.

The processors 111 and 131 may adjust the plurality of dialogue act groups based on whether each of the plurality of sampled dialogue act groups satisfies at least one conditional relationship included in the dialogue graph for the user dialogue input.

First, the processors 111 and 131 may determine one dialogue graph corresponding to the type of user dialogue input among a plurality of dialogue graphs created with respect to various dialogue datasets.

Thereafter, the processors 111 and 131 may adjust the plurality of dialogue act groups based on the determined dialogue graph.

Referring to FIG. 10, the determined dialogue graph may include G as a dialogue act which satisfies the first conditional relationship (should relationship) for the user dialogue input, include A, C, F and G as dialogue acts which satisfy the second conditional relationship (can relationship), and include A as a dialogue act which satisfies the third conditional relationship (should-not relationship).

The processors 111 and 131 may remove B from the first dialogue act group $a_1$ so that the first dialogue act group $a_1$ satisfies the second conditional relationship (can relationship) based on the determined dialogue graph.

Further, the processors 111 and 131 may add G to the first dialogue act group $a_1$ so that the first dialogue act group $a_1$ satisfies the first conditional relationship (should relationship) based on the determined dialogue graph.

Furthermore, the processors 111 and 131 may remove A from the first dialogue act group $a_1$ so that the first dialogue act group $a_1$ satisfies the third conditional relationship (should-not relationship) based on the determined dialogue graph.

Similar to this, the processors 111 and 131 may remove A from the second dialogue act group $a_2$ so that the second dialogue act group $a_2$ satisfies the first to third conditional relationships based on the determined dialogue graph.

In this case, after an adjustment task for the plurality of dialogue act groups is completed, the first dialogue act group $a_1$ includes three dialogue acts C, F, and G and the second dialogue act group $a_2$ includes two dialogue acts C and G.

As described above, the plurality of sampled dialogue act groups are adjust to suit the dialogue graph to enhance the reliability of the task-oriented dialogue service provided by the system 1000 and control power for the dialogue model.

In step S109, the processors 111 and 131 of the system 1000 may select one dialogue act group which satisfies a predetermined condition among the plurality of adjusted dialogue act groups, and provide the selected dialogue act group as a response to the user dialogue.

The processors 111 and 131 may select a dialogue act group including the largest number of dialogue acts which satisfy at least one conditional relationship of the dialogue graph among the plurality of adjusted dialogue act groups.

For example, the processors 111 and 131 may select the first dialogue act group $a_1$ including the largest number of dialogue acts which satisfy at least one conditional relationship of the dialogue graph between the first dialogue act group $a_1$ including three dialogue acts C, F and G and the second dialogue act groups $a_2$ including two dialogue acts C and G through an adjustment process, and provide the selected first dialogue act group $a_1$ as the response to the user dialogue input.

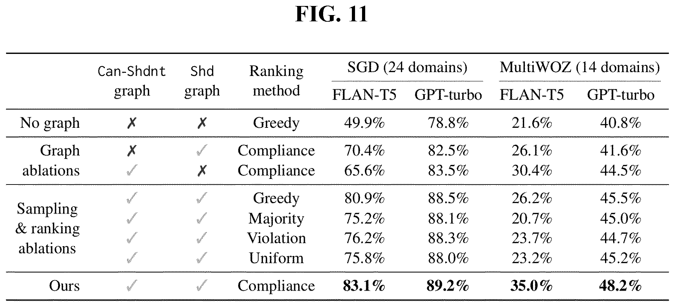

In FIG. 11, response prediction performance indexes (F-1 score) for user dialogue inputs of dialogue models FLAN-T5 and GPT-turbo to which the task-oriented dialogue method S100 based on the dialogue graph according to an embodiment of the present disclosure is applied are provided with respect to dialogue datasets SGD and MultiWOZ.

In the table of FIG. 11, the response prediction performance index of the dialogue model may be changed as a scheme of selecting, as the response, one of the plurality of dialogue act groups created from the dialogue models FLAN-T5 and GPT-turbo and adjusted based on the dialogue graph is changed.

Further, in the case of selecting one of the plurality of dialogue act groups, the response prediction performance index of the dialogue model may be changed according to whether the adjustment task based on at least one conditional relationship of the dialogue graph is performed.

For example, the processors 111 and 131 may select a dialogue act group determined to have a highest response probability by the dialogue model among the plurality of dialogue act groups, and provide the selected dialogue act group as the response to the user dialogue input (greedy).

Further, the processors 111 and 131 may select a dialogue act group having the largest number of dialogue acts which satisfy at least one conditional relationship of the dialogue graph among the plurality of dialogue act groups (compliance), or select a dialogue act group which is least adjusted based on at least one conditional relationship and provide the selected dialogue act group as the response to the user dialogue input (violation).

Furthermore, the processors 111 and 131 may select a dialogue act group most sampled among the plurality of dialogue act groups sampled by the dialogue model, and provide the selected dialogue act group as the response to the user dialogue input (majority).

Referring to FIG. 11, the response prediction performance index of the dialogue model is the highest when following the scheme (compliance) of adjusting the plurality of dialogue act groups based on all of the first conditional relationship (should relationship), the second conditional relationship (can relationship), and the third conditional relationship (should-not relationship) of the dialogue graph, and selecting the dialogue act group having the largest number of dialogue acts which satisfy at least one conditional relationship of the dialogue graph among the plurality of dialogue act groups.

As described above, the plurality of dialogue act groups are appropriately adjusted based on the dialogue graph, and one dialogue act group which most satisfies the conditional relationship of the dialogue graph among the plurality of adjusted dialogue act groups is provided as the response to the user dialogue input to provide a more reliable response.

Meanwhile, the method S100 may further include a step or operation of determining a response dialogue act by providing one dialogue act included in one selected dialogue act group as the response to the user dialogue input.

For example, when the user dialogue input is in the form of text data in which a voice 'please, book the hotel' is converted into text, the first dialogue act group $a_1$ selected among the plurality of adjusted dialogue act groups may include three dialogue acts 'how many people are planning stay? (C)', 'when are you planning to stay? (F)', and 'what grade hotel are you planning to stay at? (G)'.

In the step or operation of determining a response dialogue act, the processors 111 and 131 may select one dialogue act among the plurality of dialogue acts C, F, and G included in the first dialogue act group $a_1$, and provide the selected dialogue act as the response to the user dialogue input. In this case, the processors 111 and 131 may calculate a relevance of each of the plurality of dialogue acts C, F, and G included in the first dialogue act group $a_1$ to the user dialogue input, and select and provide one dialogue act having the highest relevance as the response to the user dialogue input.

Furthermore, the processors 111 and 131 may determine the type of the task requested by the user based on the user dialogue input and a dialogue act group selected as the response, and perform the determined task.

For example, when 'booking the hotel' is determined as the type of the task, the processors 111 and 131 may perform or complete the booking of a hotel which suits a request of the user based on various information related to the booking of a hotel determined during a series of dialogues including the user dialogue input and the selected dialogue act group.

As described above, the system 1000 adjusts a dialogue act sampled by the dialogue model based on a dialogue graph in which a predetermined conditional relationship is structuralized and modeled based on the dialogue dataset, and provides the adjusted dialogue act as the response to the user dialogue input to provide a more reliable response to the user.

Furthermore, the type of the task requested by the user may be accurately determined based on a series of dialogues including the user dialogue input, and a dialogue act adjusted according to the dialogue graph and determined as a final response according to a predetermined condition, and the system 1000 performs the determined task to provide a task performing service which may be satisfied by the user.

## TASK PERFORMING METHOD S200 BASED ON A CONTEXT OF A TASK-ORIENTED DIALOGUE

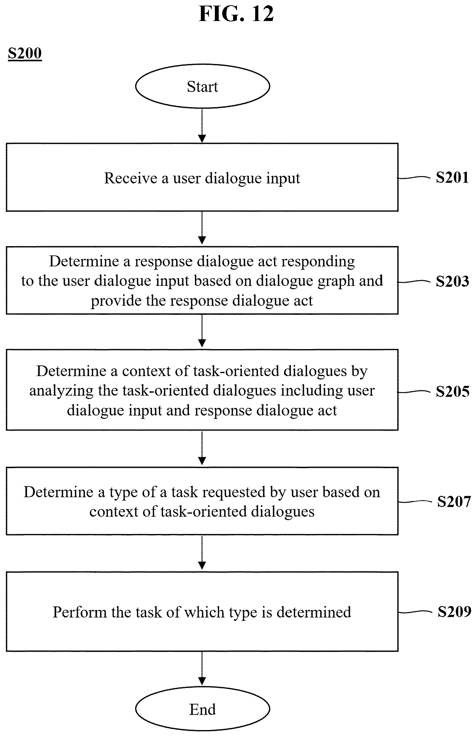

FIG. 12 is a flowchart of a task performing method S200 based on a context of a task-oriented dialogue through a dialogue model according to an embodiment of the present disclosure.

Referring to FIG. 12, the task performing method S200 according to an embodiment may include step S201 of receiving user dialogue input, step S203 of determining and providing a response dialogue act to the user dialogue input based on a dialogue graph, step S205 of determining the context of the task-oriented dialogue by analyzing data of a series of task-oriented dialogues including the user dialogue input and the response, step S207 of determining the type of the task requested by a user based on the context of the task-oriented dialogue, and step S209 of performing the task of which type is determined.

In step S201, the processors 111 and 131 of the system 1000 may receive the user dialogue input.

For example, the processors 111 and 131 may receive data of a user dialogue input which a user computing device 110 which may be implemented as various types of electronic devices receives through a user input component 121.

In step S203, the processors 111 and 131 of the system 1000 may determine a response dialogue act responding to the user dialogue input based on a dialogue graph related to the user dialogue input.

Step S203 may be substantially the same as the task-oriented dialogue method S100 described with reference to FIGS. 9 and 10, and a detailed description is omitted herein.

In step S205, the processors 111 and 131 of the system 1000 analyzes data of a series of task-oriented dialogues included in the user dialogue input and the response dialogue act to determine the context of the task-oriented dialogue.

The processors 111 and 131 of the system 1000 may determine a context of a series of task-oriented dialogues constituted by the user dialogue inputs and the response dialogue acts responding to the user dialogue inputs.

For example, the processors 111 and 131 of the system 1000 may extract a plurality of keywords included in data of the task-oriented dialogue, and analyze a correlation between a plurality of dialogue acts included in the dialogue, an intention of the corresponding dialogue, a purpose of the corresponding dialogue, etc., based on the plurality of extracted keywords to finally determine the context of the task-oriented dialogue.

In step S207, the processors 111 and 131 of the system 1000 may determine the type of the task requested by the user based on the context of the task-oriented dialogue.

The processors 111 and 131 of the system 1000 may determine the type of the task corresponding to the context of the task-oriented dialogue determined based on data related to the task corresponding to the context of the task-oriented dialogue.

In this case, the data related to the task corresponding to the context of the task-oriented dialogue may be pre-stored in memories 112 and 132 of the system 1000 or pre-learned by machine learning models 120 and 140.

For example, when the context of the task-oriented dialogue is determined as an automatic hotel booking service being required according to a hotel booking request of the user, the processors 111 and 131 of the system 1000 may determine the task requested by the user as 'booking the hotel'.

Meanwhile, the processors 111 and 131 of the system 1000 may determine a plurality of types of tasks based on the context of the task-oriented dialogue. The task-oriented dialogue may include various types of user dialogue inputs and various response dialogue acts responding to the user dialogue inputs, and the context of the task-oriented dialogue may be related to various tasks. As a result, the plurality of task types may be determined based on the context of the task-oriented dialogue according to an embodiment.

In step S209, the processors 111 and 131 of the system 1000 may perform a task of which type is determined.

The processors 111 and 131 of the system 1000 may perform the task of which type is determined based on the task-oriented dialogue including the user dialogue input and the response dialogue act, and a performing result to the user.

In this case, the processors 111 and 131 of the system 1000 may generate a programming code or an instruction required to perform the task of which type is determined based on the context of the task-oriented dialogue, and execute the created programming code or instruction to perform the task.

Further, according to an embodiment, as the processors 111 and 131 of the system 1000 receive the user dialogue input, the processors 111 and 131 of the system 1000 capture a screen of an electronic device being used by the user to acquire a user screen shot.

Thereafter, the processors 111 and 131 of the system 1000 may determine the type of a task based on information on the determined context of the task-oriented dialogue and analysis of the user screen shot.

In this case, the processors 111 and 131 of the system 1000 may automatically perform a series of actions (e.g., cursor movement, clicks, text input, etc.) required to perform the task determined on the user screen in performing the task.

Furthermore, when the type of the task is determined based on the context of the task-oriented dialogue according to an embodiment, the processors 111 and 131 of the system 1000 may determine at least one task performing model optimized to the task of which type is determined based on the task-oriented dialogue among a plurality of task performing models, and perform the task by using at least one determined task performing model.

In this case, the method in which the processors 111 and 131 of the system 1000 determine at least one task performing model optimized to the task, and perform the task may be substantially the same as an 'MoE based model specifying method' to be described later, and a detailed description thereof is omitted herein.

In addition, when the plurality of types of tasks are determined, the processors 111 and 131 of the system 1000 may determine a plurality of task performing models optimized to the plurality of tasks, respectively, and perform the plurality of tasks by using the determined task performing models.

## METHOD S300 FOR **AUTOMATICALLY PERFORMING TASKS DETERMINED BASED ON A USER DIALOGUE INPUT**

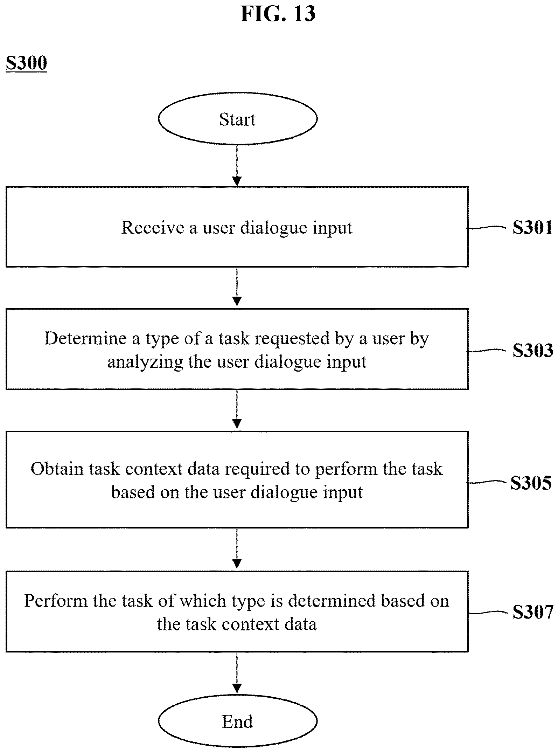

FIG. 13 is a flowchart of a method for automatically performing tasks determined based on a user dialogue input according to an embodiment of the present disclosure.

According to a method S300 according to an embodiment, the processors 111 and 131 of the system 1000 may automatically perform task requested by a user by analyzing a user dialogue input.

In this case, the processors 111 and 131 of the system 1000 may systematically and automatically perform the tasks requested by the user based on data obtained from user dialogue input required to perform the task.

In addition, according to one embodiment, various tasks can be systematically and automatically performed by at least one system for performing the task determined through a user dialogue input. The at least one system for performing the task may comprise various legacy systems within an enterprise operating system.

For example, the legacy systems may comprise systems that support various business tasks, such as enterprise resource planning (ERP) systems, human resource (HR) management systems, customer relationship management (CRM) systems, manufacturing execution systems (MES), and quality management systems (QMS).

Referring to FIG. 13, a method S300 for automatically performing tasks according to an embodiment may include step S301 of receiving user dialogue input, step S303 of determining a type of a task requested by a user by analyzing the user dialogue input, step S305 of obtaining task context data required to perform the task based on the user dialogue input, and step S307 of performing the task of which type is determined based on the task context data.

In step S301, the processors 111 and 131 of the system 1000 may receive the user dialogue input.

For example, the processors 111 and 131 may receive data of a user dialogue input which a user computing device 110 which may be implemented as various types of electronic devices receives through a user input component 121.

In step S303, the processors 111 and 131 of the system 1000 may determine the type of the task requested by the user by analyzing the user dialogue input.

For example, if the user dialogue input is 'Book a hotel', the processor 111 and 131 of the system 1000 may determine the type of the task requested by the user corresponding to the user dialogue input as 'Provide hotel reservation service' through keyword analysis for the user dialogue input.

In addition, for example, if the user dialogue input is 'Approve the cost proposal for the purchase of items', the processor 111 and 131 of the system 1000 may determine the type of the task requested by the user corresponding to the user dialogue input as 'Approving the cost proposal.'

In this way, in step S303, the processors 111 and 131 of the system 1000 may determine the types of various tasks corresponding to the user dialogue input.

In step S305, the processors 111 and 131 of the system 1000 may obtain task context data required to perform the task based on user dialogue input.

The task context data may indicate all basic information about performing a task requested by a user, and may include data on key information required to specify the content of the task.

The task context data may be included in the user dialogue input, or may be stored in a task context database (not shown) in the form of data of information related to keywords included in the user dialogue input.

For example, if the user dialogue input is 'Make a reservation for hotel A', the type of the task can be determined as 'Provide hotel reservation service', and data related to 'Hotel A' included in the user dialogue input may be acquired as task context data which is basic information for performing the task.

In addition, for example, if the user dialogue input is 'Approve the cost proposal for the purchase of product B', the type of the task can be determined as 'Approving the cost proposal', and data related to 'The cost proposal for the purchase of product B' included in the user dialogue input may be acquired as task context data which is basic information for performing the task.

In addition, in this case, data already stored in the task context database as data related to information such as 'specification information of product B', 'budget information related to the purchase of product B', 'past cost information for the purchase of product B', and 'approvement line policy information' may be acquired as task context data.

In step S307, the processors 111 and 131 of the system 1000 may perform the task of which type is determined based on the task context data.

In this case, the processors 111 and 131 of the system 1000 may perform the task of which type is determined in step S303 by utilizing the task context data acquired in step S305.

For example, if the type of the task is determined as 'Approving the cost proposal', the processors 111 and 131 of the system 1000 may specify the content of the task based on information about 'The cost proposal for the purchase of product B'. In addition, the processors 111 and 131 of the system 1000 may generate data for an electronic approvement request for the cost proposal for the purchase of product B based on information about 'specification information of product B', 'budget information related to the purchase of product B', 'past cost information for the purchase of product B', and 'approvement line policy information' and provide the data to a user with approvement authority.

In this case, the data of the electronic approvement request may include a user interface requesting approval for the cost proposal for the purchase of product B and all data related to product B. The user with approvement authority may approve through a user interface requesting approval, and data regarding the approvement may be ultimately transmitted to the user computing device 110 of the user who requested the approvement task.

Meanwhile, in step S307, the processors 111 and 131 of the system 1000 may perform the task more efficiently by using a system for performing the task optimized for performing a specific task.

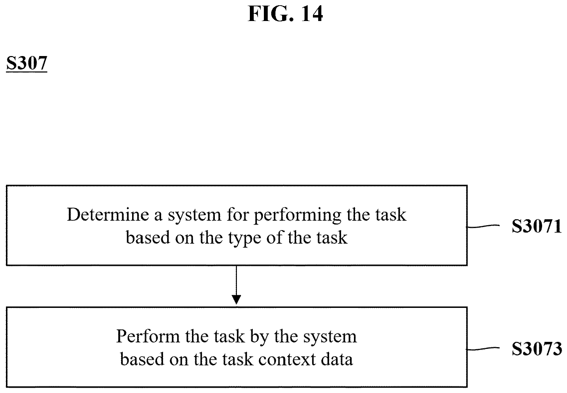

For example, referring to FIG. 14, a step S307 may include a step S3071 of determining a system for performing the task based on the type of the task, and a step S3073 of performing the task by the system based on the task context data.

In step S3071, the processors 111 and 131 of the system 1000 may determine the system for performing the task optimized for performing the task based on the type of the task.

For example, the processors 111 and 131 of the system 1000 may determine at least one system optimized for performing the task among various types of linked legacy systems such as an ERP system, an HR management system, a CRM, a MES, and a QMS as a task performing system.

In step S3073, the processors 111 and 131 of the system 1000 may control the task to be performed by the system determined in step S3071 based on the task context data acquired in S305.

In addition, in step S307, the processors 111 and 131 of the system 1000 may execute the system to perform the task, and may enter a predetermined external system and complete the performing the task through some kind of calculation on the predetermined external system.

For example, the processors 111 and 131 of the system 1000 may automatically log in to a predetermined external system by utilizing login information previously stored in an authentication information database (not shown) to enter the predetermined external system. The processors 111 and 131 of the system 1000 may complete the performing the task through a predetermined calculation on the predetermined external system.

For example, if the task is determined as 'ordering product A,' the processors 111 and 131 of the system 1000 may enter the website of a company that supplies product A and perform the task of ordering product A on the website of the company. In this case, the processors 111 and 131 of the system 1000 may utilize login information for the website of the company to enter the system of the company and automatically perform the task of ordering product A on the website of the company.

Furthermore, the method S300 may further include a step of receiving task-related information related to the task.

The task-related information may be input from a user independently from data of user dialogue input or task context data acquired based on user dialogue input.

For example, a user may enter information related to an invoice related to expense processing through a user computing device 110, and request to perform a task of generating accounting documents for the invoice and requesting approvement. In this case, data of the information related to the invoice regarding expense processing may correspond to data of task-related information.

In addition, the data of task-related information may comprise text data. For example, the data of task-related information may comprise data that includes text-based information such as electronic documents and emails.

For example, the user may provide the system 1000 with a user dialogue input requesting a task such as 'Schedule a meeting for Project A', a report file related to Project A, a document file including schedule information of collaborators related to Project A, etc. Such a report file related to Project A, and such a document file including schedule information of collaborators related to Project A may be the data of task-related information including data in form of text.

In addition, the processors 111 and/or 131 of the system 1000 may obtain capture data of the task-related information by capturing the task-related information in the form of text data.

For example, the processors 111 and/or 131 of the system 1000 may obtain the capture data of the task-related information including information of the document file by capturing at least a portion of the document file provided by the user. The processors 111 and 131 of the system 1000 can analyze the content of task-related information using an optical character recognition Optical Character Recognition (OCR) method.

Furthermore, the processors 111 and/or 131 of the system 1000 may generate a programming code for performing the task by analyzing the capture data of the task-related information and execute the programming code to perform the task.

For example, the processors 111 and/or 131 of the system 1000 may perform a task by generating a project A meeting schedule on a day when all collaborators of project A can participate, by analyzing the document file containing schedule information of collaborators associated with project A provided by a user.

The processors 111 and/or 131 of the system 1000 may provide data of recommendation information related to the task to the user by analyzing text-type task-related information provided by the user.

The recommendation information may include information that the processors 111 and/or 131 of the system 1000 determines to be useful to the user by analyzing the task-related information in the form of text data. For example, the recommendation information may include information related to document files and related emails related to the task, etc.

For example, the processors 111 and/or 131 of the system 1000 may provide the contents of an email to be sent to collaborators of Project A, or promotional material information related to Project A to the user as the recommendation information by analyzing the report file related to Project A provided by a user, or the document file including schedule information of collaborators associated with Project A.

In this way, according to an embodiment, the processors 111 and 131 of the system 1000 may use data of task-related information provided through the user computing device 110 required to perform the task, in addition to data of user dialogue input and task context data, to perform the task.

Conclusively, according to an embodiment, the processors 111 and 131 of the system 1000 may perform a task based on at least one of task context data and data of task-related information.

Furthermore, according to another embodiment, the method S300 may further include a step of determining a response dialogue act responding to the user dialogue input based on a dialogue graph and providing the response dialogue act, and a step of determining a context of task-oriented dialogues by analyzing the task-oriented dialogues including the user dialogue input and the response dialogue act.

The step of determining a response dialogue act and the step of determining a context of task-oriented dialogues are substantially the same as steps S203 and S205 of Fig. 12, and therefore, a description thereof is omitted here.

In this case, the processors 111 and 131 of the system 1000 can determine the type of the task requested by the user based on the context of the task-oriented dialogues.

## MOE BASED MODEL SPECIFYING METHOD

A method in which a computing system 1000 implements a mixture of experts (MoE) architecture based model providing service which implements modularization for a predetermined specialized model (SM) within a mixture of experts (MoE) model according to an embodiment will be described in detail with reference to the accompanying drawings.

FIG. 13 is a flowchart for describing an MoE based model specifying method according to an embodiment of the present disclosure and FIG. 14 is a conceptual diagram for describing an MoE based model specifying method according to an embodiment of the present disclosure.

Referring to FIGS. 13 and 14, the method in which the computing system 1000 implements the MoE architecture based model providing service which implements modularization for the specialized model (SM) within the MoE model according to an embodiment may include step S301 of performing MoELM based MoE training, step S303 of acquiring specialized model (SM) feature information according to the MoE training, step S305 of creating a specialized module model based on the acquired specialized model (SM) feature information, step S307 of acquiring predetermined domain information, step S309 of determining a domain-specific specified model based on the acquired domain information, step S311 of constructing an MoE model based on the determined domain-specific specialized model, and step S313 of providing output data based on the constructed MoE model.

Specifically, in the case of a normalized pre-trained specialized model (SM), there are multiple cases in which it is difficult to distinguish or determine which model is specialized to a specific domain.

As a result, there may be a predetermined limit in selecting and utilizing a specialized model (SM) most optimized to a specific task.

In order to resolve the limit, in an embodiment, the computing system 1000 may perform the following process of specifying and modularizing a role and/or function of each specialized model (SM), and effectively selecting and utilizing a customized specialized model (SM) optimized to a specific domain based on the selected and modularized role and/or function.

In detail, the computing system 1000 according to an embodiment may perform the MoELM based MoE training (S301).

That is, in the embodiment, the computing system 1000 may perform the MoE training based on the MoELM based on the combinations of the plurality of specialized models SM and routers RT.

As the training is performed, the computing system 1000 may train each of the plurality of specialized models (SM) included in the MoELM.

In other words, as such training is performed, each of the plurality of specialized models (SM) in the MoELM may be trained.

Here, according to an embodiment, the specialized model (SM) as an artificial intelligence model in which optimization learning for a specific task is performed may be an artificial intelligence trained according to training data and a training scheme specialized to a corresponding task.

In an embodiment, the specialized model (SM) may include one or more predetermined models (such as MoELM and/or DMoE model), a normal MoE model (NM), an external model (EM), and/or a specialized module model (NM) which are/is trained.

Further, the computing system 1000 according to an embodiment may acquire the specialized feature information (SMFI) according to the MoE training (S303).

Here, the specialized feature information (SMFI) according to an embodiment may include information specifying a role and/or a function of a predetermined specialized model (SM).

In detail, referring back to FIG. 8, in an embodiment, the computing system 1000 may further include a model specialization module (MSM).

In addition, the computing system 1000 may acquire the above-described specialized model feature information (SMFI) by interlocking with, or being connected with, the model specialization module (MSM).

Here, the model specialization module (MSM) according to an embodiment may be an artificial intelligence module that creates and outputs the specialized model feature information (SMFI) corresponding to a predetermined specialized model (SM) based on the MoE training.

Specifically, in an embodiment, the model specialization module (MSM) may monitor and track a task allocation state of the router RT to each specialized model (SM) when the above-described MoE training is performed.

That is, in an embodiment, the model specialization module (MSM) may determine a task to be distributed and allocated by the router RT and a specialized model (SM) to which the task is to be distributed and allocated as the MoELM is trained and operated.

In some embodiments, the model specialization module (MSM) may create, match, and manage a tag specifying each task allocation state for each tracked task allocation state.

Through this, in an embodiment, the model specialization module (MSM) may determine a specialty for each of a plurality of specialized models (SM).

Further, in an embodiment, the model specialization module (MSM) may create specialized model feature information (SMFI) corresponding to each specialized model (SM) based on the determined specialty for each specialized model (SM).

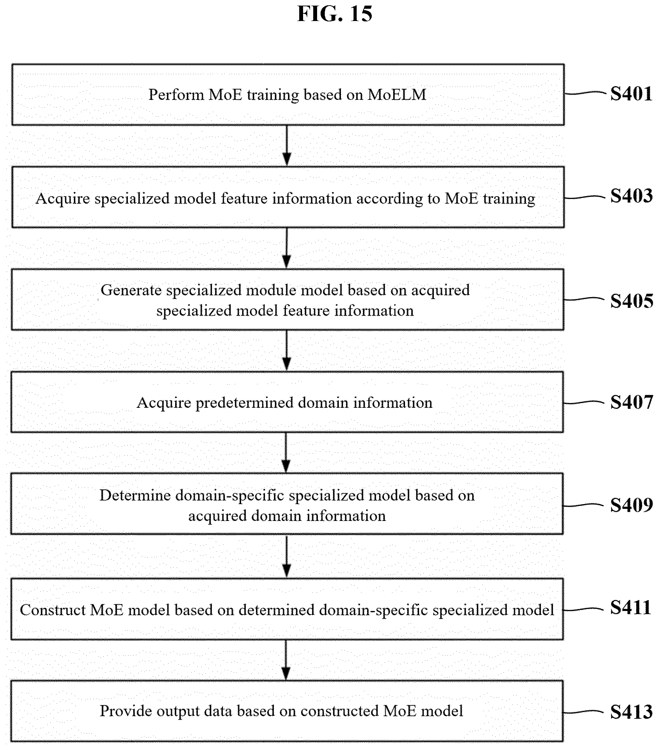

FIG. 15 illustrates an example of specialized model feature information (SMFI) according to an embodiment of the present disclosure.

Referring to FIG. 15, as an embodiment, a model specialization module (MSM) may create the above-described specialized model feature information (SMFI) in at least one format of the following formats.

**[FIRST FORMAT]** Specialized model feature information (SMFI) of a form of selecting one category among predetermined specialized model (SM) role and/or function specifying category (e.g., query and response or device control) according to a user input

**[SECOND FORMAT]** Specialized model feature information (SMFI) of a form of specifying a role and/or a function of the specialized model (SM) in a natural language form

**[THIRD FORMAT]** Specialized model feature information (SMFI) of a form of specifying the role and/or the function of the specialized model (SM) in at least one format of the first format and the second format, and further defining input data and output data of the corresponding specialized model (SM)

In an embodiment, the model specialization module (MSM) may provide the created specialized model feature information (SMFI) to the computing system 1000 as the output data.

Therefore, the computing system 1000 may acquire feature information for each specialized model (SM) by interlocking with, or being connected with, the model specialization module (MSM).

Further, the computing system 1000 according to an embodiment may generate a specialized module model (MM) based on the acquired specialized model feature information (SMFI) (S305).

For example, the specialized module model (MM) may be a specialized model (SM) independently separated while matching predetermined specialized model feature information (SMFI).

In detail, in an embodiment, the computing system 1000 may match the specialized model feature information (SMFI) acquired as described above with a specialized model (SM).

Further, in an embodiment, the computing system 1000 may independently separate the specialized models (SM) matched with the specialized model feature information (SMFI), and make the separated specialized models (SM) into a database.

That is, in an embodiment, the computing system 1000 may perform the modularization of matching a respective specialized model (SM) and specialized model feature information (SMFI), and separately distinguish, store, and manage the matched specialized model feature information (SMFI).

Therefore, the computing system 1000 may create the specialized module model (MM) which is the specialized model (SM) independently separated while matching with the specialized model feature information (SMFI).

As described above, in an embodiment, the computing system 1000 may determine a feature for each specialized model (SM) within a given MoE model (e.g. MoELM in an embodiment), and reflect the determined feature, and modularize each specialized model (SM) into a small size at a level to be reused and sharable.

As a result, the computing system 1000 may filter and select a specialized model (SM) which implements a data processing process optimized to a specific domain rapidly and efficiently with higher accuracy, and easily support flexible scalability and reduction of the MoE model.

Further, the computing system 1000 according to an embodiment may acquire predetermined domain information (S307).

For example, the domain information according to an embodiment may be information defining a domain which specifies data, a rule, a terminology, a problem definition, and/or a process used to perform a task specified by a predetermined AI system.

In detail, in an embodiment, the computing system 1000 may acquire predetermined input data (e.g., text, voice, image, moving picture, and/or specific sensor based sensing data).

Further, in an embodiment, the computing system 1000 may determine a domain corresponding to the acquired input data.

At this time, in an embodiment, a method in which the computing system 1000 determines the domain for the input data may be performed based on various disclosed algorithms which are capable of performing the method, but in an embodiment of the present disclosure, a corresponding algorithm itself is not limited or restricted.

Therefore, the system 1000 according to an embodiment may acquire domain information for a task to be processed.

Further, the computing system 1000 according to an embodiment may determine a domain-specific specialized model based on the acquired domain information (S309).

The domain-specific specialized model according to an embodiment may be a specialized model (SM) that executes a data processing (e.g., deep learning in an embodiment) optimized to a predetermined domain.

Referring back to FIG. 14, in an embodiment, the computing system 1000 may determine at least one domain-specific specialized model based on the domain information and specialized model feature information (SMFI) acquired as described above.

In detail, in an embodiment, the computing system 1000 may detect at least one specialized model feature information (SMFI) having a feature corresponding to the acquired domain information.

For example, when confirming 'a feature of a task which outputs response data to predetermined query data', the computing system 1000 may detect at least one specialized model feature information (SMFI) specified as 'a role and/or a function specialized to a query and a response' among the plurality of specialized model feature information (SMFI) stored in the database.

In some embodiments, the computing system 1000 may detect at least one specialized model feature information (SMFI) corresponding to the domain information based on a plurality of tags created by the model specialization module (MSM) for each task allocation state of the router RT for the plurality of specialized models (SM) upon the above-described MoE architecture based training.

That is, in some embodiments, the computing system 1000 compares the plurality of tags created as above and the domain information with each other to detect at least one specialized model feature information (SMFI) corresponding to the domain information.

According to an embodiment, the computing system 1000 may filter a comparison target tag according to a creation time of each tag.

Specifically, the computing system 1000 may set, as the comparison target tag, at least one tag created at a specific task allocation time according to a user input and/or a predetermined self process.

For example, the computing system 1000 may set, as the comparison target tag, at least one tag created for a task allocation state performed after a predetermined time during an entire training time by considering that task allocation accuracy is enhanced as a training rate becomes higher.

Therefore, the computing system 1000 compares at least one filtered tag and the domain information, which guarantees higher accuracy to detect at least one specialized model feature information (SMFI) corresponding to the domain information.

Further, in an embodiment, the computing system 1000 may extract a specialized model (SM) (e.g., specialized module model (MM)) matched with each of detected specialized model characteristic information (SMFI).

In addition, in an embodiment, the computing system 1000 may determine at least one extracted specialized module model (MM) as the domain-specific specialized model.

Further, the computing system 1000 according to an embodiment may construct an MoDE model based on the determined domain-specific specialized model (S311).

Referring back to FIG. 14, in an embodiment, the computing system 1000 may construct one model (hereinafter, referred to as a DMoE model) which operates like MoE architecture based on at least one domain-specific specialized model determined as described above.

In other words, the computing system 1000 may construct an MoE model (e.g., the DMoE model) which implements data processing optimized to a specific domain by using at least some models (e.g., a domain-specific specialized model) among a plurality of specialized models (SM) modularized with a small size.

In detail, in an embodiment, the computing system 1000 combines at least one domain-specific specialized model and a predetermined router RT to construct the above-described DMoE model.

The DMoE model may be included in the sLLM according to an embodiment of the present disclosure.

In other words, the sLLM according to an embodiment may include the DMoE model constructed according to an embodiment.

Further, the computing system 1000 according to an embodiment of the present disclosure may provide output data based on the constructed MoE model (S313).

That is, in an embodiment, the AI agent specialization model (AIAM) may provide output data (e.g., response data to a specific query and/or a control signal according to a specific instruction) for predetermined input data (e.g., text, voice, image, moving picture, and/or specific sensor based sensing data) by using the DMoE model constructed as described above.

As described above, in an embodiment, the computing system 1000 may specify a role and/or a function of each specialized model (SM) and at the same time, separate and modularize each specified role and/or function to a level to be reusable and sharable, and construct a customized MoE model (e.g., a DMoE model) optimized to a specific domain rapidly and flexibly by utilizing the role and/or function, and provide predetermined output data according to efficient task processing using the constructed model.

Therefore, in an embodiment, the computing system 1000 may implement and provide an MoE model having further enhanced data processing (and/or computation) speed and inference performance, and support various services through the MoE model to effectively achieve performance and quality enhancement.

**MOE APPLICATION LLM BASED AI AGENT** PROVIDING METHOD

A method in which the computing system 1000 determines an application model optimized to a domain according to an external environment based on a large language model (LLM) which applies mixture of experts (MoE), and implements an MoE architecture based model providing service which provides an on-device specialized artificial intelligence (AI) agent performing an output based on the determined application model according to an embodiment will be described in detail with reference to the accompanying drawings.

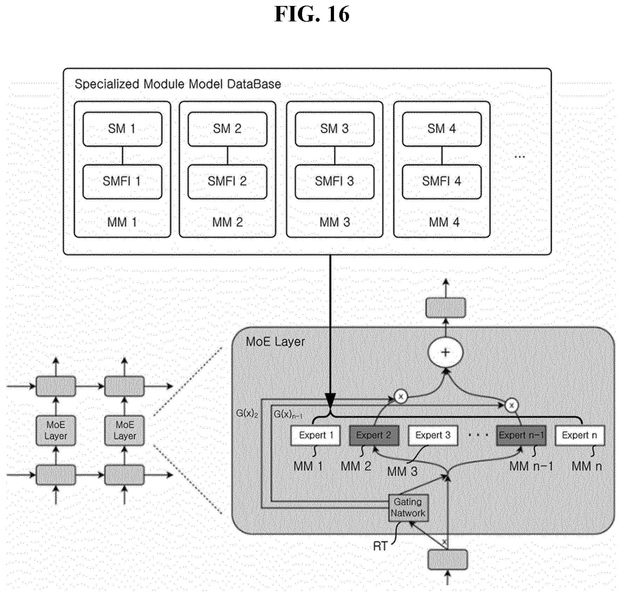

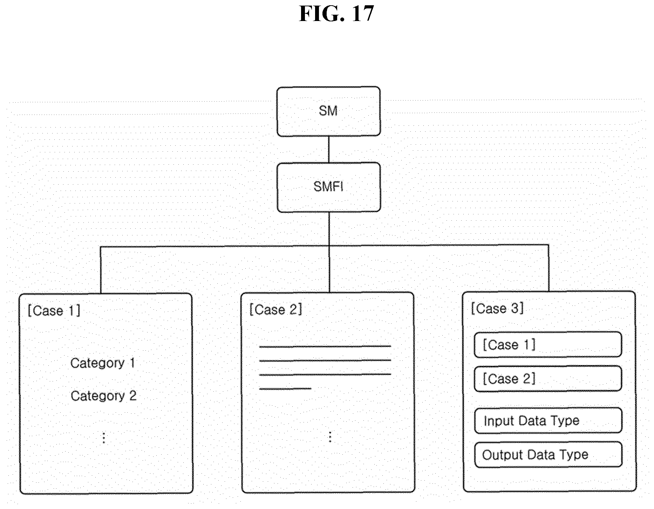

FIG. 16 is a flowchart for describing an MoE application LLM based AI agent providing method according to an embodiment of the present disclosure, and FIG. 17 is a conceptual diagram for describing the MoE application LLM based AI agent providing method according to an embodiment of the present disclosure.

Referring to FIGS. 16 and 17, a method in which the computing system 1000 determines the application model optimized to the domain according to the external environment based on the LLM which applies the MoE, and implements the MoE architecture based model providing service which provides the on-device specialized artificial intelligence (AI) agent specialized model (AIAM) performing the output based on the determined application model according to an embodiment may include step S401 of executing an on-device AI agent service, step S403 of acquiring predetermined input data, step S405 of determining a domain according to the acquired input data, step S407 of determining an application model according to the determined domain, and step S409 of providing output data based on the determined application model.

Specifically, the computing system 1000 according to an embodiment of the present disclosure may execute the on-device AI agent service (S401).

Here, for example, the on-device AI may be a technology that directly performs AI based data processing in a device of the user other than a cloud and/or an external server. Since the on-device AI performs or completes all processing in the device without sending data to the outside of the device of the user, the on-device AI may provide advantages such as personal information protection, real-time processing, and reduction in dependence on Internet connections.

Accordingly, in this regard, the on-device AI agent service may be various services implemented by utilizing the on-device AI.

For example, the on-device AI agent service may include smart phone's voice assistant services (e.g., Google Assistant, Apple Siri, Samsung Bixby, etc.), smart camera services (e.g., HDR+ of Google Pixel, Deep Fusion of Apple, etc.), fitness tracker and smartwatch services (e.g., Apple Watch, Fitbit, etc.), autonomous driving services (e.g., Autopilot of Tesla, etc.), and/or home security services (e.g., Nest Secure, Ring, etc.).

In an embodiment, the computing system 1000 may execute a predetermined on-device AI agent service based on interlocking with, or being connected with, the AI agent specialized model (AIAM) according to an embodiment and/or a predetermined application.

Further, the computing system 1000 according to an embodiment may acquire predetermined input data (S403).

In the embodiment, the computing system 1000 may acquire at least one input data (e.g., predetermined text, voice, image, moving picture, and/or sensing data) based on interlocking with, or being connected with, a user input and/or an external device (e.g., a predetermined sensor, etc.) based on the on-device AI agent service executed as described above.

In an embodiment, the input data acquired as described above may include predetermined data which may specify a target task of data processing.

Further, the computing system 1000 according to an embodiment may determine a domain according to the acquired input data (S405).

For instance, the domain according to an embodiment may include data, rule, terminology, problem definition, and/or process used to perform a task specified by a predetermined AI system.

In detail, in an embodiment, the computing system 1000 may determine a domain corresponding to the acquired input data.

In an embodiment, a method in which the computing system 1000 determines the domain for the input data may be performed based on various disclosed algorithms which are capable of performing the method, but in an embodiment, a corresponding algorithm itself is not limited or restricted.

Therefore, the computing system 1000 according to an embodiment may acquire domain information for a task to be processed.

Further, the computing system 1000 according to an embodiment may determine an application model according to the determined domain (S407).

For example, the application model according to an embodiment may be a model which performs predetermined task processing according to given input data.

In an embodiment, the application model may be at least one model of secondary models S described above.

In other words, the secondary model S according to an embodiment may be a model which may perform a specific task according to control and management of the master model P (e.g., the orchestrator OCT and/or the route RT) which is in charge of control and management of a predetermined AI system operation.

In an embodiment, such a secondary model S may include one or more of an sLLM (including MoELM and/or DMoE model), a normal MoE model (NM), an external model (EM), and/or a specialized model (SM) including a specialized module model (NM).

In detail, in an embodiment, the computing system 1000 may determine at least one application model based on the domain information acquired as described above.

In more detail, as an embodiment, the computing system 1000 may detect at least one model (e.g., a domain-specific specialized model) which executes a data processing operation (e.g., deep learning in an embodiment) optimized to given domain information among the secondary models S described above by interlocking with, or being connected with, the master model P (i.e., the orchestrator OCT and/or the router RT) according to an embodiment.

In an embodiment, a specific method in which the computing system 1000 detects the domain-specific specialized model by interlocking with, or being connected with, the master model P is omitted by applying the description of the router RT and the orchestrator OCT disclosed in the 'AI agent specialized model (AIAM)' described above.

Further, in an embodiment, the computing system 1000 may determine at least one detected application model as the application model.

Further, the computing system 1000 according to an embodiment may provide output data based on the determined application model (S409).

That is, in an embodiment, the computing system 1000 may create and provide output data (e.g., response data to a specific query and/or a control signal according to a specific instruction) for predetermined input data (e.g., text, voice, image, moving picture, and/or specific sensor based sensing data) based on at least one application model determined through the AI agent specialized model (AIAM) as described above.

In other words, the computing system 1000 may perform a predetermined request task based on given input data by using the application model determined as described above, and provide output data according to the performed data processing.

In an embodiment, the computing system 1000 may provide the output data based on the on-device AI agent service described above.

As described above, in an embodiment, the computing system 1000 may effectively determine a model optimized to data processing according to a given domain even in an on-device environment based on the AI agent specialized model (AIAM) including the models (e.g., the MoELM, the DMoE model, and/or the specialized module model (MM) in an embodiment) implemented by applying the MoE architecture, and provide an output according to efficient data processing through the determined model according to various embodiments.

That is, the computing system 1000 may implement and provide an artificial intelligence model (e.g., the AI agent specialized model (AIAM)) that better understands, better executes, and well answers a given task even in any environment.

Therefore, in an embodiment, the computing system 1000 may enhance qualities and performances of various AI agent based services (e.g., smart phone's voice assistant services, smart camera services, fitness tracker and smartwatch services, autonomous driving services, and/or home security services).

The operations according to certain embodiments described above are implemented in a form of a program command which may be executed through various computer components means and may be recorded in the computer readable recording medium. The computer readable recording medium may include singly a program command, a data file, or a data structure or a combination thereof. The program command recorded in the computer readable recording medium may be specially designed and configured for the present disclosure, or may be publicly known to and used by those skilled in the computer software field. Examples of the computer readable recording media may include a hardware device particularly configured to store and execute program commands, magnetic media such as hard disks, floppy disks, and magnetic tape, optical recording media such as CD-ROM disks and DVD, magneto-optical media such as floptical disks, ROM, RAM, and flash memories. Examples of the program commands include a high-level language code executable by a computer by using an interpreter, and the like, as well as a machine language code created by a compiler. The hardware devices may be changed to one or more software modules in order to perform the processing according to the present disclosure, and an opposite situation thereof is available.

Specific executions described in the present disclosure are exemplary embodiments and the scope of the present disclosure is not limited even by any method. For brevity of the specification, descriptions of conventional electronic configurations, control systems, software, and other functional aspects of the systems may be omitted. Further, connection or connection members of lines among components exemplarily represent functions connections and/or physical or circuitry connections and may be represented as various functional connections, physical connections, or circuitry connections which are replaceable or added in an actual device. Further, unless otherwise specified, such as "essential", "important", etc., the connections may not be components particularly required for application of the present disclosure.

Further, in the detailed description of the present disclosure, which is described, while the present disclosure has been described with respect to the preferred embodiments, it will be understood by those skilled in the art or those skilled in the art having ordinary knowledge in the technical field that various changes and modifications of the present disclosure may be made without departing from the spirit and the technical scope of the invention disclosed in the following claims. Therefore, the technical scope of the present disclosure should not be limited to the contents described in the detailed description of the present disclosure but should be defined by the claims.

**Claims**

1.  A computerized method comprising:

    receiving a user dialogue input;
    determining a type of a task requested by a user by analyzing the user dialogue input;
    obtaining task context data required to perform the task from the user dialogue input; and
    based on the task context data, performing the task of which type is determined.

2.  The computerized method of claim 1, wherein the performing of the task comprises determining a system for performing the task among a plurality of systems based on the type of the task, and performing the task by the system, determined for performing the task, based on the task context data.

3.  The computerized method of claim 1, further comprising:

    receiving task-related information related to the task,
    wherein the performing of the task comprises performing the task based on one or more of the task context data or the task-related information.

4.  The computerized method of claim 3, wherein:

    the task-related information comprises text data, and
    the performing of the task comprises:

        obtaining capture data of the task-related information by capturing the task-related information in a form of the text data;
        generating a programming code for performing the task by analyzing the capture data of the task-related information; and
        performing the task by executing the programming code.

5.  The computerized method of claim 2, wherein the performing of the task by the system determined for performing the task comprises entering a predetermined external system and performing the task by performing at least a part of calculation on the predetermined external system.

6.  The computerized method of claim 1, further comprising:

    determining a response dialogue act responding to the user dialogue input based on a dialogue graph, and providing the response dialogue act; and
    determining a context of task-oriented dialogues by analyzing the task-oriented dialogues including the user dialogue input and the response dialogue act;
    wherein the determining of the type of the task comprises determining the type of the task based on the context of the task-oriented dialogues.

7. The computerized method of claim 6, wherein the determining of the context of the task-oriented dialogues comprises extracting a plurality of keywords from the task-oriented dialogues, and analyzing one or more of a correlation between a plurality of dialogue acts included in the task-oriented dialogues, an intent of the task-oriented dialogues, or a purpose of the task-oriented dialogues based on the plurality of keywords.

8. The computerized method of claim 6, further comprising:

   determining at least one task performing model optimized to the task of which type is determined among a plurality of task performing models based on the context of the task-oriented dialogues,
   wherein the performing of the task of which type is determined comprises performing the task by using the determined at least one task performing model.

9. The computerized of claim 1, wherein, a computing system comprising memory and a processor supports at least a part of calculation for the determining of the type of the task and to the performing of the task.

10. The computerized method of claim 1, wherein the performing of the task comprises generating a programming code for performing the task by analyzing a programming code related to the task of which type is determined, and performing the task by executing the generated programming code for performing the task.

11. The computerized method of claim 6, further comprising:

   acquiring a user screen shot by capturing a screen of an electronic device from which the user dialogue input is received,
   wherein the determining of the type of the task requested by the user comprises determining the type of the task based on the context of the task-oriented dialogues and the user screen shot.

12. The computerized method of claim 6, wherein the determining of the response dialogue act includes:

   generating the dialogue graph which models at least one conditional relationship for a dialogue dataset;
   sampling a plurality of dialogue act groups for responding to the user dialogue input by using a pre-trained dialogue model;
   adjusting the plurality of dialogue act groups based on the dialogue graph; and
   selecting one dialogue act group satisfying a predetermined condition among the plurality of dialogue act groups.

13. The computerized method of claim 12, wherein the at least one conditional relationship includes one or more of a first conditional relationship (a should relationship) indicating what utterance should occur for one utterance in a dialogue flow, a second conditional relationship (a can relationship) indicating what utterance can occur for one utterance in the dialogue flow, and a third conditional relationship (a should-not relationship) indicating what utterance should not occur for one utterance in the dialogue flow.

14. The computerized method of claim 12, wherein the selecting of the one dialogue act group comprises selecting the one dialogue act group which best satisfies the predetermined condition among the plurality of dialogue act groups.

15. A system for automatically performing tasks determined based on a user dialogue input, comprising:

   at least one memory configured to store instructions that are executable; and
   at least one processor configured to execute one or more of the instructions to perform operations comprising:

   receiving a user dialogue input,
   determining a type of a task requested by a user by analyzing the user dialogue input,
   obtaining task context data required to perform the task based on the user dialogue input, and
   performing the task of which type is determined based on the task context data.

16. A system for automatically performing tasks determined based on a user dialogue input, comprising:

   an electronic device configured to receive a user dialogue input; and
   a computing device including at least one processor configured to:

receive a user dialogue input,
determine a type of a task requested by a user by analyzing of the user dialogue input,
obtain task context data required to perform the task based on the user dialogue input, and
perform the task of which type is determined based on the task context data.

# FIG. 1

# FIG. 2

180

181

182

183

Task
Performing

Task
Requesting

# FIG. 3

300

**FIG. 4**

# FIG. 5

200

Computing device

Central Intelligence Layer

| Application 1 | ⟷ | Model 1 |
| Application 2 | ⟷ | Model 2 |
| Application 3 | ⟷ | Model 3 |
| ⋮ | | ⋮ |
| Application N | ⟷ | Model N |

Central device data layer ⟷ Sensor(s)

Context manager

Device state

Additional component(s)

**FIG. 6**

# FIG. 7

S10

**TOD-Flow Graph**

A → B

A → (node)

D ← C → (node)

A B Dialog Acts

**CAN:** A is required for B

SHOULD: After A, C always follows

SHOULD NOT: After A, D never follows

S20

**Next Dialog Act Prediction Task**

**Next Dialog Acts:**
Confirm Information
Book Hotel

→ **Filter & Modify With Graph** →

**Next Dialog Acts:**
Confirm Information
- Book Hotel
+ Inform Price

S30

**Response Generation Task**

**Sampled Responses:**
1. Booking is complete
2. The price is …; Can you confirm?
3. Can you confirm … ?

→ **Violation Check & Rank With Graph** →

**Ranked Response:**
2. The price is …; Can you confirm?
3. Can you confirm … ?
1. Booking is complete

# FIG. 8

AIAM: Artificial Intelligence Agent Specialization Model

P: Master Model

RT: Router, Gating Network

OCT: Orchestrator

S: Secondary Model

sLLM
(small Large Language Model)

NM: Normal MoE Model

EM: External Model

SM: Specialized Model

ASM: MoE Automatic Setting Module

MSM: Model Specialization Module

# FIG. 9

**S100**

```
            ┌─────────┐
            │  Start  │
            └─────────┘
                 │
                 ▼
┌───────────────────────────────────────────┐
│ Generate dialogue graph which models at    │
│ least one specific conditional relationship │──── S101
│ for dialogue dataset                        │
└───────────────────────────────────────────┘
                 │
                 ▼
┌───────────────────────────────────────────┐
│        Receive user dialogue input          │──── S103
└───────────────────────────────────────────┘
                 │
                 ▼
┌───────────────────────────────────────────┐
│ Sample plurality of dialogue act groups for │
│ responding to user dialogue input by        │──── S105
│ using pre-trained dialogue model            │
└───────────────────────────────────────────┘
                 │
                 ▼
┌───────────────────────────────────────────┐
│     Adjust plurality of dialogue act groups │
│        based on dialogue graph              │──── S107
└───────────────────────────────────────────┘
                 │
                 ▼
┌───────────────────────────────────────────┐
│ Select any one dialogue act group satisfying │
│ predetermined condition among plurality of   │──── S109
│ dialogue action groups                       │
└───────────────────────────────────────────┘
                 │
                 ▼
            ┌─────────┐
            │   End   │
            └─────────┘
```

**FIG. 10**

# FIG. 11

| | Can-Shdnt graph | Shd graph | Ranking method | SGD (24 domains) | | MultiWOZ (14 domains) | |
|---|---|---|---|---|---|---|---|
| | | | | FLAN-T5 | GPT-turbo | FLAN-T5 | GPT-turbo |
| No graph | ✗ | ✗ | Greedy | 49.9% | 78.8% | 21.6% | 40.8% |
| Graph ablations | ✗ | ✓ | Compliance | 70.4% | 82.5% | 26.1% | 41.6% |
| | ✓ | ✗ | Compliance | 65.6% | 83.5% | 30.4% | 44.5% |
| Sampling & ranking ablations | ✓ | ✓ | Greedy | 80.9% | 88.5% | 26.2% | 45.5% |
| | ✓ | ✓ | Majority | 75.2% | 88.1% | 20.7% | 45.0% |
| | ✓ | ✓ | Violation | 76.2% | 88.3% | 23.7% | 44.7% |
| | ✓ | ✓ | Uniform | 75.8% | 88.0% | 23.2% | 45.2% |
| Ours | ✓ | ✓ | Compliance | **83.1%** | **89.2%** | **35.0%** | **48.2%** |

# FIG. 12

**S200**

```
        ( Start )
            │
            ▼
```

| Receive a user dialogue input | ⟋ **S201** |

```
            │
            ▼
```

| Determine a response dialogue act responding to the user dialogue input based on dialogue graph and provide the response dialogue act | ⟋ **S203** |

```
            │
            ▼
```

| Determine a context of task-oriented dialogues by analyzing the task-oriented dialogues including user dialogue input and response dialogue act | ⟋ **S205** |

```
            │
            ▼
```

| Determine a type of a task requested by user based on context of task-oriented dialogues | ⟋ **S207** |

```
            │
            ▼
```

| Perform the task of which type is determined | ⟋ **S209** |

```
            │
            ▼
        ( End )
```

# FIG. 13

S300

```
        ┌─────────┐
        │  Start  │
        └─────────┘
             │
             ▼
┌──────────────────────────────────────────┐
│       Receive a user dialogue input       │──── S301
└──────────────────────────────────────────┘
             │
             ▼
┌──────────────────────────────────────────┐
│  Determine a type of a task requested by  │
│     a user by analyzing the user          │──── S303
│            dialogue input                 │
└──────────────────────────────────────────┘
             │
             ▼
┌──────────────────────────────────────────┐
│  Obtain task context data required to     │
│  perform the task based on the user       │──── S305
│            dialogue input                 │
└──────────────────────────────────────────┘
             │
             ▼
┌──────────────────────────────────────────┐
│  Perform the task of which type is        │
│  determined based on the task context     │──── S307
│                data                       │
└──────────────────────────────────────────┘
             │
             ▼
        ┌─────────┐
        │   End   │
        └─────────┘
```

# FIG. 14

S307

Determine a system for performing the task
based on the type of the task    — S3071

Perform the task by the system
based on the task context data    — S3073

# FIG. 15

| | |
|---|---|
| Perform MoE training based on MoELM | S401 |

↓

| | |
|---|---|
| Acquire specialized model feature information according to MoE training | S403 |

↓

| | |
|---|---|
| Generate specialized module model based on acquired specialized model feature information | S405 |

↓

| | |
|---|---|
| Acquire predetermined domain information | S407 |

↓

| | |
|---|---|
| Determine domain-specific specialized model based on acquired domain information | S409 |

↓

| | |
|---|---|
| Construct MoE model based on determined domain-specific specialized model | S411 |

↓

| | |
|---|---|
| Provide output data based on constructed MoE model | S413 |

# FIG. 16

# FIG. 17

## FIG. 18

| | |
|---|---|
| Execute on-device AI agent service | S501 |

↓

| | |
|---|---|
| Acquire predetermined input data | S503 |

↓

| | |
|---|---|
| Determine domain according to acquired input data | S505 |

↓

| | |
|---|---|
| Determine application model according to determined domain | S507 |

↓

| | |
|---|---|
| Provide output data based on determined application model | S509 |

# FIG. 19

Europäisches Patentamt

European Patent Office

Office européen des brevets

# EUROPEAN SEARCH REPORT

**Application Number**

EP 24 21 7725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/376697 A1 (CHOW YINLAM [US] ET AL) 23 November 2023 (2023-11-23) <br> * paragraph [0059] - paragraph [0060] * <br> * paragraph [0085] - paragraph [0091] * <br> ----- | 1-16 | INV. <br> G06F16/3329 <br> G06F40/35 |
| X | JIAHUAN PEI ET AL: "Retrospective and Prospective Mixture-of-Generators for Task-oriented Dialogue Response Generation", <br> ARXIV.ORG, CORNELL UNIVERSITY LIBRARY, 201 OLIN LIBRARY CORNELL UNIVERSITY ITHACA, NY 14853, <br> 19 November 2019 (2019-11-19), <br> XP081603302, <br> * the whole document * <br> ----- | 1-16 | |
| X | US 2023/120940 A1 (QIU LIANG [US] ET AL) 20 April 2023 (2023-04-20) <br> * paragraph [0017] - paragraph [0020] * <br> * paragraph [0023] - paragraph [0024] * <br> * paragraph [0031] - paragraph [0032] * <br> * paragraph [0036] - paragraph [0041] * <br> * paragraph [0044] - paragraph [0045] * <br> ----- | 1-16 | |

**TECHNICAL FIELDS SEARCHED (IPC)**

G06F

The present search report has been drawn up for all claims

| Place of search | Date of completion of the search | Examiner |
|---|---|---|
| Munich | 26 March 2025 | Frank, Korbinian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7725

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2025

| Patent document cited in search report | Publication date | Patent family member(s) | | Publication date |
|---|---|---|---|---|
| US 2023376697 A1 | 23-11-2023 | CN | 119173877 A | 20-12-2024 |
| | | EP | 4497131 A1 | 29-01-2025 |
| | | US | 2023376697 A1 | 23-11-2023 |
| | | WO | 2023224836 A1 | 23-11-2023 |
| US 2023120940 A1 | 20-04-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230174949